(19) Europäisches Patentamt
European Patent Office
Office européen des brevets

(11) **EP 4 343 609 B1**

(12) **EUROPEAN PATENT SPECIFICATION**

(45) Date of publication and mention
of the grant of the patent:
**05.11.2025 Bulletin 2025/45**

(51) International Patent Classification (IPC):
**G06F 30/15** (2020.01)   **G06F 30/20** (2020.01)
**G05B 23/02** (2006.01)   **B64F 5/60** (2017.01)
**B64D 45/00** (2006.01)   **G06F 119/02** (2020.01)
**G06F 119/04** (2020.01)

(21) Application number: **22382877.3**

(22) Date of filing: **23.09.2022**

(52) Cooperative Patent Classification (CPC):
**B64F 5/60; G05B 23/021; G05B 23/0283;**
B64D 2045/0085; G06F 30/15; G06F 30/20;
G06F 2119/02; G06F 2119/04

(54) **AIRCRAFT PERFORMANCE MODEL BASED ON HISTORICAL FLIGHT DATA**

FLUGZEUGLEISTUNGSMODELL AUF DER BASIS HISTORISCHER FLUGDATEN

MODÈLE DE PERFORMANCE D'AÉRONEF BASÉ SUR DES DONNÉES DE VOL HISTORIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2024 Bulletin 2024/13**

(73) Proprietor: **The Boeing Company
Arlington, VA 22202 (US)**

(72) Inventors:
 • **LÓPEZ LEONÉS, Javier**
  **28042 MADRID (ES)**
 • **GRACIA BERNA, Antonio**
  **28042 MADRID (ES)**
 • **POLAINA MORALES, Manuel**
  **80805 MUNICH (DE)**

 • **DEL POZO DOMINGUEZ, Maria**
  **28042 MADRID (ES)**
 • **VEGA ASTORGA, Rubén**
  **28042 MADRID (ES)**
 • **UZUN, Mevlut**
  **34467 ISTANBUL (TR)**
 • **INALHAN, Gokhan**
  **34467 ISTANBUL (TR)**
 • **DEMIREZEN, Mustafa Umut**
  **34467 ISTANBUL (TR)**

(74) Representative: **ZBM Patents - Zea, Barlocci &
Markvardsen
Rambla de Catalunya, 123
08008 Barcelona (ES)**

(56) References cited:
 **EP-A1- 3 699 833     EP-A1- 3 920 160
 CN-A- 113 962 420     US-A1- 2021 245 896**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## FIELD OF THE DISCLOSURE

The present disclosure is generally related to generation of an aircraft performance model based on historical flight data.

## BACKGROUND

A nominal aircraft performance model is often used to predict aircraft performance. Performance of an individual aircraft can differ from the nominal aircraft performance model for various reasons, such as manufacturing differences, changes over time, etc. Measures taken to account for the difference between predicted performance of the aircraft and actual performance of the aircraft can increase cost. For example, when there is less confidence in a fuel consumption prediction for a flight, the aircraft has to carry extra fuel to account for any prediction inaccuracies. Document CN113962420A is entitled Aircraft fuel consumption prediction method, computing device and storage medium.

## SUMMARY

In a particular implementation, a device includes a memory configured to store a first aircraft performance model. The device also includes one or more processors coupled to the memory and configured to obtain flight data of one or more aircraft of a particular aircraft type. The one or more processors are also configured to identify a first portion of the flight data as first phase flight data associated with a first phase of one or more flights of the one or more aircraft, and to apply the first aircraft performance model to the first phase flight data to determine first parameter values of first parameters. The one or more processors are further configured to identify a second portion of the flight data as second phase flight data associated with a second phase of the one or more flights, and to apply the first aircraft performance model to the second phase flight data to determine second parameter values of second parameters. The one or more processors are also configured to generate, based at least in part on the first parameter values and the second parameter values, a second aircraft performance model of a particular aircraft of the particular aircraft type. The one or more processors are further configured to generate, based on the second aircraft performance model, an output associated with a planned flight of the particular aircraft, and to provide the output to a second device.
In another particular implementation, a method includes obtaining, at a first device, flight data of one or more aircraft of a particular aircraft type. The method also includes identifying, at the first device, a first portion of the flight data as first phase flight data associated with a first phase of one or more flights of the one or more aircraft, and applying, at the first device, a first aircraft performance model to the first phase flight data to determine first parameter values of first parameters. The method further includes identifying, at the first device, a second portion of the flight data as second phase flight data associated with a second phase of the one or more flights, and applying, at the first device, the first aircraft performance model to the second phase flight data to determine second parameter values of second parameters. The method also includes generating, based at least in part on the first parameter values and the second parameter values, a second aircraft performance model of a particular aircraft of the particular aircraft type. The method further includes generating, based on the second aircraft performance model, an output associated with a planned flight of the particular aircraft, and providing the output from the first device to a second device.
In another particular implementation, a non-transitory computer-readable medium stores instructions that, when executed by one or more processors, cause the one or more processors to obtain flight data of one or more aircraft of a particular aircraft type. The non-transitory computer-readable medium stores instructions that, when executed by the one or more processors, cause the one or more processors to identify a first portion of the flight data as first phase flight data associated with a first phase of one or more flights of the one or more aircraft, and to apply a first aircraft performance model to the first phase flight data to determine first parameter values of first parameters. The non-transitory computer-readable medium stores instructions that, when executed by the one or more processors, cause the one or more processors to identify a second portion of the flight data as second phase flight data associated with a second phase of the one or more flights, and to apply the first aircraft performance model to the second phase flight data to determine second parameter values of second parameters. The non-transitory computer-readable medium stores instructions that, when executed by the one or more processors, cause the one or more processors to generate, based at least in part on the first parameter values and the second parameter values, a second aircraft performance model of a particular aircraft of the particular aircraft type. The non-transitory computer-readable medium stores instructions that, when executed by the one or more processors, cause the one or more processors to generate, based on the second aircraft performance model, an output associated with a planned flight of the particular aircraft, and to provide the output to a device.
The features, functions, and advantages described herein can be achieved independently in various implementations or may be combined in yet other implementations, further details of which can be found with reference to the following description and drawings.

## BRIEF DESCRIPTION OF THE DRAWINGS

FIG. 1A is a diagram that illustrates a system configured to generate an aircraft performance model based on historical flight data.

FIG. 1B is a diagram of an illustrative example of operations performed by a flight data analyzer of the system of FIG. 1A.

FIG. 2 is a diagram of an illustrative example of data augmentation performed by a particular implementation of a data pre-processor of the system of FIG. 1A.

FIG. 3 is a diagram of a particular implementation of a phase data segmentor of the system of FIG. 1A.

FIG. 4 is a diagram of an illustrative example of using an aircraft performance model of the system of FIG. 1A to determine parameter data.

FIG. 5A is a diagram of a particular implementation of a model generator of the system of FIG. 1A.

FIG. 5B is a diagram of another implementation of the model generator of the system of FIG. 1A.

FIG. 5C is a diagram of an illustrative example of operations performed by the flight data analyzer of the system of FIG. 1A.

FIG. 6A is a diagram of a particular implementation of an output generator of the system of FIG. 1A.

FIG. 6B is a diagram of an illustrative example of data generated by an error analyzer of the system of FIG. 1A.

FIG. 7 is a flow chart of an example of a method of generating an aircraft performance model based on historical flight data.

FIG. 8 is a flow chart illustrating a life cycle of an aircraft that includes the flight data analyzer of the system of FIG. 1A.

FIG. 9 is a block diagram of an aircraft that includes the flight data analyzer of the system of FIG. 1A.

FIG. 10 is a block diagram of a computing environment including a computing device configured to support aspects of computer-implemented methods and computer-executable program instructions (or code) according to the present disclosure.

## DETAILED DESCRIPTION

Aspects disclosed herein present systems and methods for generating an aircraft performance model based on historical flight data. Performance of an individual aircraft can differ from the nominal aircraft performance model for various reasons, such as manufacturing differences, changes over time, etc. According to a particular aspect, a baseline aircraft performance model is updated based on historical flight data to generate an aircraft performance model that is more representative of actual performance of a particular aircraft. The generated aircraft performance model can also be updated to account for changes in performance of the particular aircraft over time.

A flight data analyzer includes a data pre-processor, a phase data segmentor, a first aircraft performance model, a model generator, an output generator, or a combination thereof. The data pre-processor has access to flight data (e.g., historical flight data) of one or more aircraft (e.g., the particular aircraft, one or more additional aircraft, or a combination thereof) of a particular aircraft type. As an example, the flight data includes sensor readings corresponding to values of various flight variables, such as altitude ($H_p$), flight path angle ($\gamma$), air temperature (T), Mach number (M), aircraft mass (m), fuel flow (FF), one or more additional flight variables, or a combination thereof. In some aspects, the flight variables can include actual values of one or more model parameters that are to be predicted by an aircraft performance model. In some aspects, the aircraft performance model can predict one or more model parameters that are not included in the flight data.

In some examples, the data pre-processor updates the flight data by removing entries that correspond to outliers, redundant information, or both. The flight data usually includes data points corresponding to normal flight conditions and may not have any data points corresponding to flight conditions that occur less frequently. In some examples, the data pre-processor identifies portions of a flight envelope of the particular aircraft type that are not represented by the flight data, determines estimated flight data corresponding to the identified portions, and adds the estimated flight data to the flight data.

The phase data segmentor groups the flight data by phases. For example, the flight data includes first flight data associated with a cruise phase of a flight of an aircraft and second flight data associated with the cruise phase of a flight of another aircraft. The phase data segmentor determines cruise phase flight data that includes the first flight data and the second flight data. Similarly, the phase data segmentor determines phase flight data for each of one or more other flight phases.

The flight data analyzer applies a first aircraft performance model (e.g., a baseline performance model or a previously generated aircraft performance model) to at least a portion of the phase data to determine parameter values of one or more model parameters. For example, the flight data analyzer applies the first aircraft performance model to the cruise phase data to determine first model parameter values. Similarly, the flight data analyzer applies the first aircraft performance model to phase data for each of the other flight phases to generate corresponding model parameter values.

The model generator generates, based on the parameter values, a second aircraft performance model of the particular aircraft. As an example, an aircraft performance model corresponds to a set of polynomial equations that have coefficients that are to be applied to input variables. The input variables can include one or more of the flight variables, one or more of the model parameters, or a combination thereof. The model generator uses linear regression to determine the coefficients of the second aircraft performance model.

In some aspects, the model generator iteratively updates the coefficients of the second aircraft performance model to reduce a difference between predicted parameter values generated by the second aircraft performance model and corresponding actual parameter values indicated by the flight data. For example, the model generator iteratively updates the second coefficients until the difference between predicted parameter values and the corresponding actual parameter values satisfies a difference threshold, a maximum count of iterations have been performed, or both.

The output generator generates an output based on the second aircraft performance model. In some examples, the output generator, based on determining that a difference between the first aircraft performance model and the second aircraft performance model is greater than a threshold, schedules inspection of the particular aircraft, generates an alert, or both. In some examples, the output generator uses the second aircraft performance model to generate output data, such as flight planning data, take off calculations, on board fuel calculations, post flight fuel analytics, simulations, etc. of the particular aircraft. Using the second aircraft performance model improves accuracy of the output data because the second aircraft performance model, that is based on historical flight data, is a closer representation of actual performance of the particular aircraft (as compared to the first aircraft performance model).

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

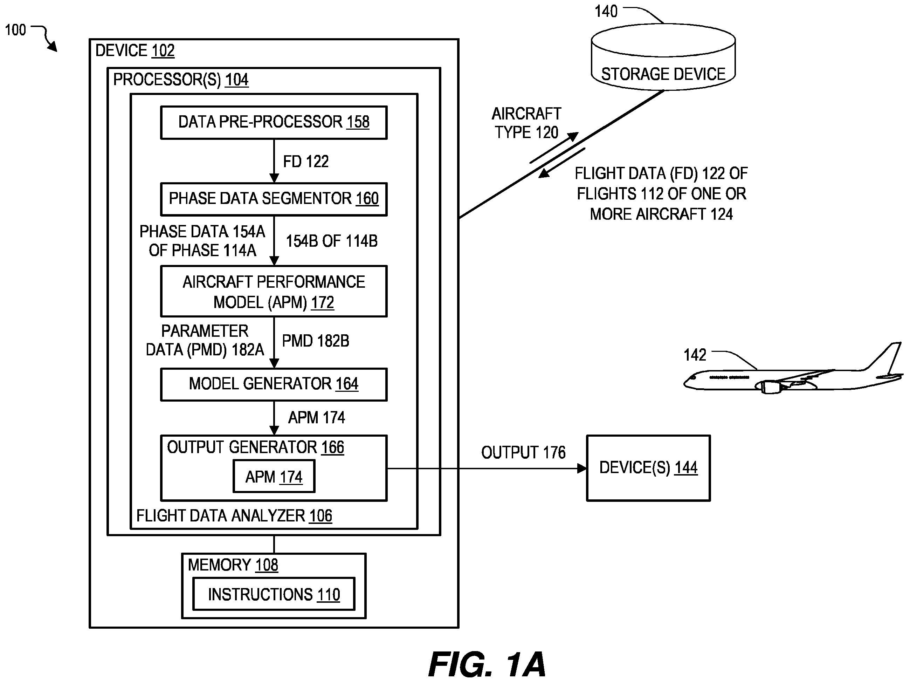

Particular implementations are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 1A, multiple phases are illustrated and associated with reference numbers 114A and 114B. When referring to a particular one of these phases, such as the phase 114A, the distinguishing letter "A" is used. However, when referring to any arbitrary one of these phases or to these phases as a group, the reference number 114 is used without a distinguishing letter.

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1A depicts a device 102 including one or more processors ("processor(s)" 104 in FIG. 1A), which indicates that in some implementations the device 102 includes a single processor 104 and in other implementations the device 102 includes multiple processors 104. For ease of reference herein, such features are generally introduced as "one or more" features and are subsequently referred to in the singular unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements. As used herein, A "and/or" B may mean that either "A and B", or "A or B", or both "A and B" and "A or B" are applicable or acceptable.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1A depicts an example of a system 100 that is configured to generate aircraft performance models based on historical flight data. The system 100 includes a device 102, a storage device 140, an aircraft 142, and one or more devices 144. Two or more of the device 102, the storage device 140, the aircraft 142, or the one or more devices 144 are interconnected via one or more networks to enable data communication. For example, the device 102 is coupled to the one or more devices 144 via one or more wireless networks, one or more wireline networks, or any combination thereof. Two or more of the device 102, the storage device 140, the aircraft 142, or the one or more devices 144 can be co-located or geographically distributed from each other.

The device 102 includes one or more processors 104 coupled to a memory 108. The memory 108 includes a computer-readable medium that stores instructions 110 that are executable by the one or more processors 104. The instructions 110 are executable to initiate, perform, or control operations to aid in generation of aircraft performance models based on historical flight data.

The one or more processors 104 include a flight data analyzer 106 that can be implemented at least in part by the one or more processors 104 executing the instructions 110. The one or more processors 104 can be implemented as a single processor or as multiple processors, such as in a multi-core configuration, a multi-processor configuration, a distributed computing configuration, a cloud computing configuration, or any combination thereof. In some implementations, one or more portions of the flight data analyzer 106 are implemented by the one or more processors 104 using dedicated hardware, firmware, or a combination thereof.

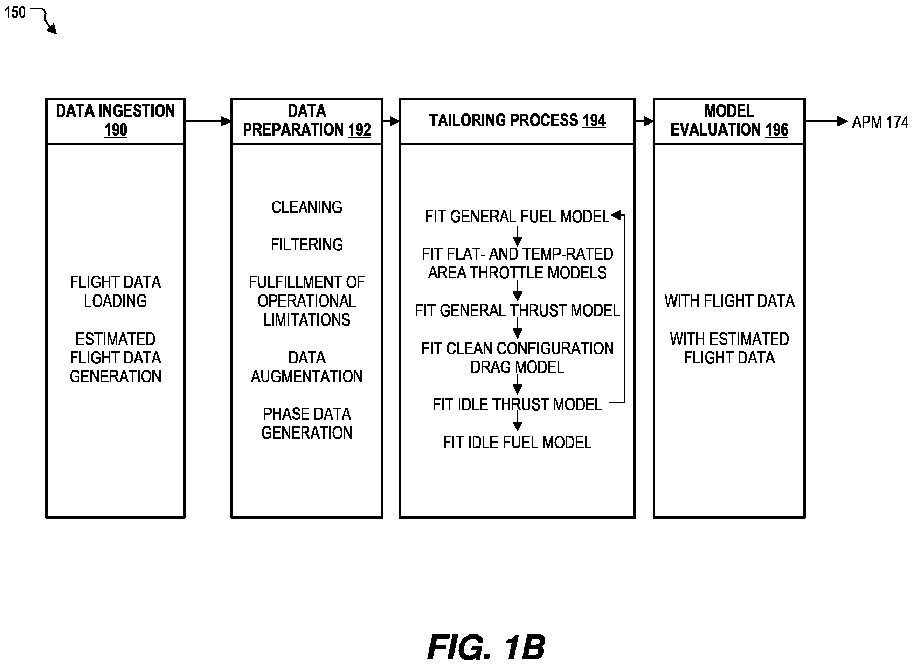

The flight data analyzer 106 includes a data pre-processor 158, a phase data segmentor 160, an aircraft performance model 172, a model generator 164, an output generator 166, or a combination thereof. In some implementations, the flight data analyzer 106 includes the data pre-processor 158 that is configured to obtain flight data (FD) 122 of flights 112 of one or more aircraft 124 and to pre-process the flight data 122, as further described with reference to FIGS. 1B-2. In an example, the data pre-processor 158 is configured to remove one or more entries from the flight data 122 that correspond to outliers, redundant information, or both. In another example, the data pre-processor 158 is configured to add estimated flight data to the flight data 122.

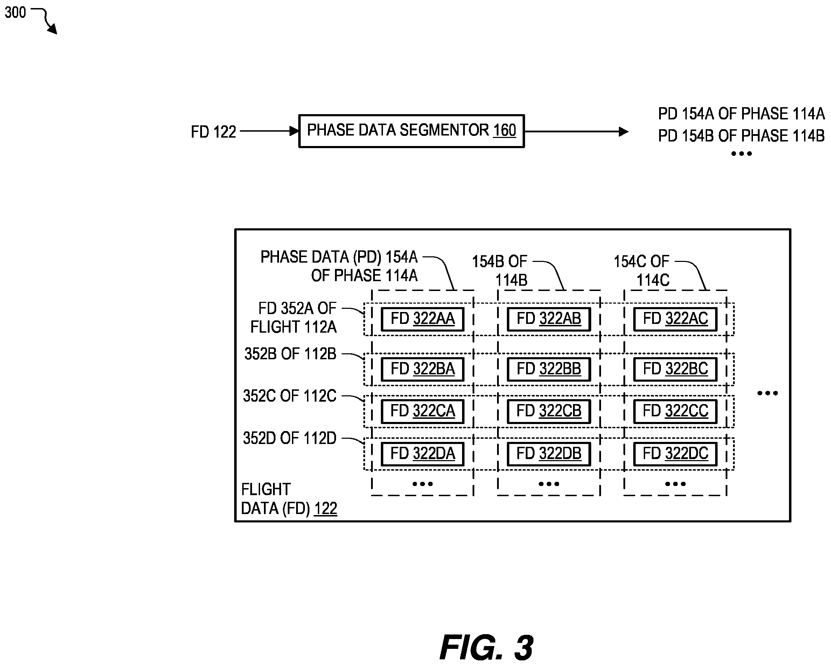

The phase data segmentor 160 is configured to group the flight data 122 by phases of the flights 112 to generate phase data 154, as further described with reference to FIGS. 1B and 3. For example, the phase data segmentor 160 is configured to identify a portion of the flight data 122 as phase data 154A corresponding to a phase 114A. In some aspects, phases 114 of a flight 112 include a taxi out phase, a takeoff phase, a climb phase, a cruise phase, a descent phase, an approach phase, a go around phase, a taxi in phase, one or more additional phases, or a combination thereof.

In some implementations, the aircraft performance model 172 corresponds to a baseline model. For example, the aircraft performance model 172 is a nominal aircraft performance model associated with an aircraft type 120. In a particular aspect, the aircraft performance model 172 is generated by a manufacturer of aircraft of the aircraft type 120. In some implementations, the aircraft performance model 172 corresponds to a previously generated aircraft performance model of the aircraft 142.

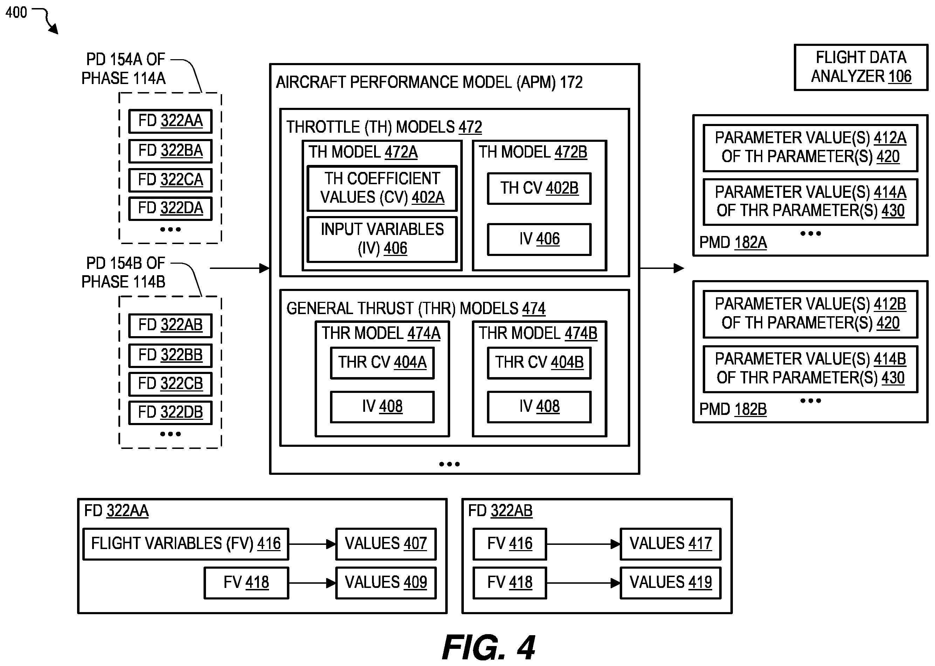

The flight data analyzer 106 is configured to apply the aircraft performance model 172 to at least a portion of the phase data 154 to generate parameter data 182, as further described with reference to FIGS. 1B and 4. For example, the flight data analyzer 106 is configured to apply the aircraft performance model 172 to at least a portion of the phase data 154A to generate parameter data 182A.

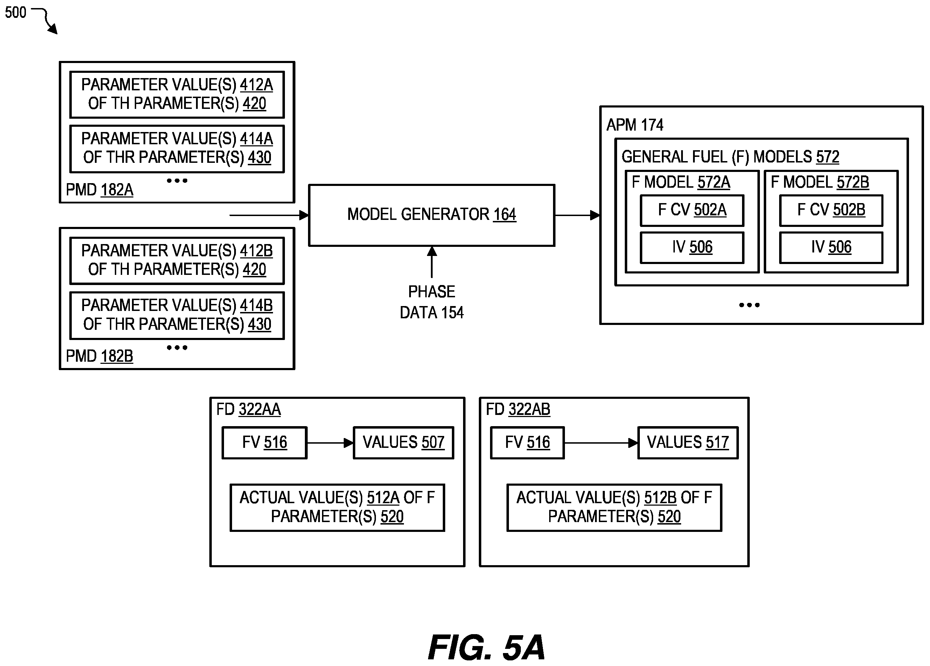

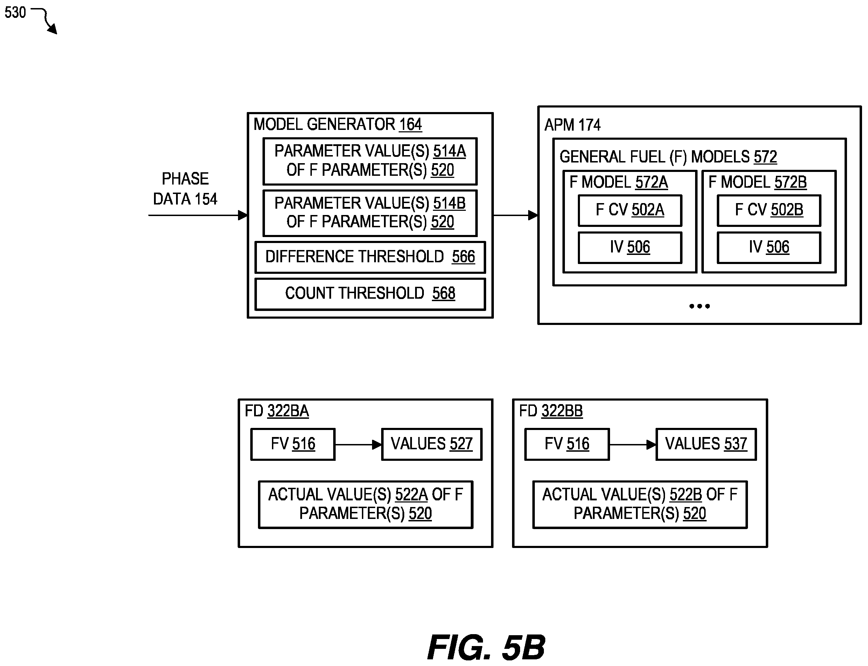

The model generator 164 is configured to generate an aircraft performance model 174 based on the parameter data 182, the phase data 154, or a combination thereof, as further described with reference to FIGS. 1B and 5A-5C. In a particular implementation, the aircraft performance model 172 corresponds to a first set of polynomial equations that include first coefficients that are to be applied to input variables. In a particular implementation, the aircraft performance model 174 corresponds to a second set of polynomial equations that include second coefficients that are to be applied to input variables, and the model generator 164 uses linear regression to determine the second coefficients of the aircraft performance model 174. The input variables can include at least a portion of the phase data 154, the parameter data 182, or a combination thereof. The model generator 164 is configured to use regression techniques (e.g., linear regression) to determine the second coefficients of the aircraft performance model 174. In some examples, the model generator 164 is configured to adjust the aircraft performance model 174 based on a comparison of the parameter data generated using the aircraft performance model 174 (e.g., predicted values) and corresponding portions of the phase data 154 (e.g., actual values), as further described with reference to FIGS. 1B and 5B.

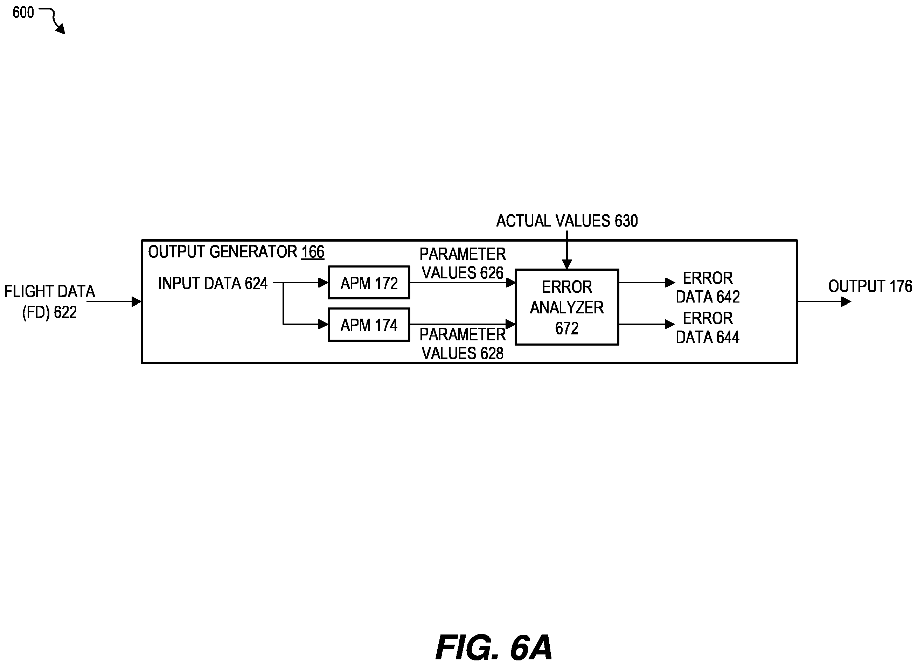

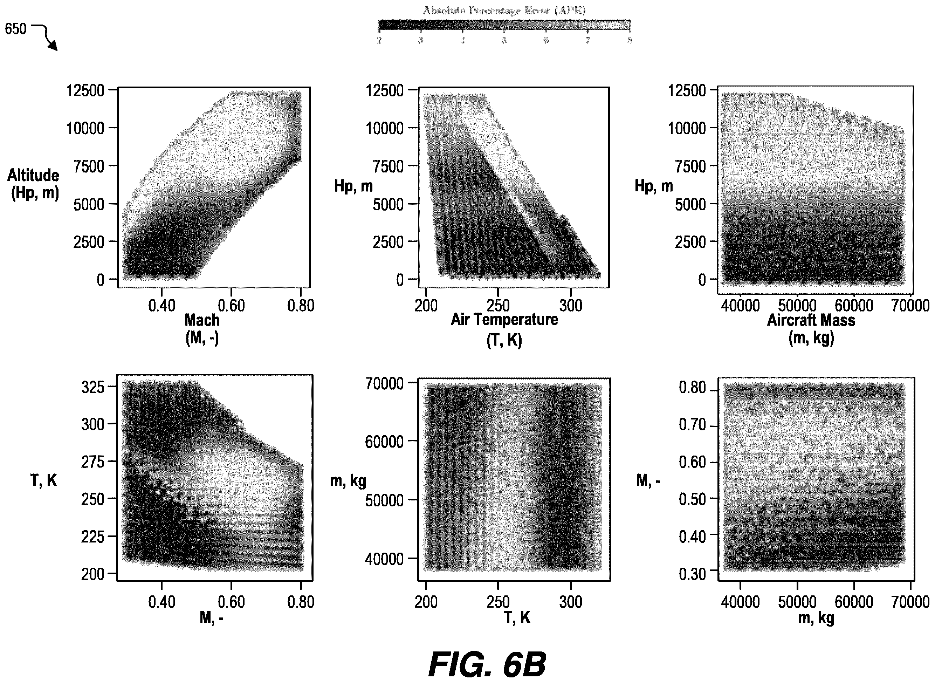

The output generator 166 is configured to generate output 176 based on the aircraft performance model 174, as further described with reference to FIGS. 6A and 6B. For example, the output generator 166 is configured to use the aircraft performance model 174 to predict performance of the aircraft 142, and to generate the output 176 based on the predicted performance. The aircraft performance model 174 is a more accurate representation of performance of the aircraft 142 as compared to the aircraft performance model 172, thereby improving the accuracy of the predicted performance.

During operation, the flight data analyzer 106, in response to determining that an aircraft performance model (APM) 174 of an aircraft 142 is to be generated (or updated), sends a request indicating an aircraft type 120 of the aircraft 142 to the storage device 140. The flight data analyzer 106, responsive to the request, receives the flight data 122 (e.g., historical flight data) of flights 112 of one or more aircraft 124 from the storage device 140. In some implementations, the one or more aircraft 124 are of the same aircraft type (e.g., the aircraft type 120) as the aircraft 142. The one or more aircraft 124 include the aircraft 142, one or more additional aircraft, or a combination thereof.

The flight data 122 of a flight 112 of an aircraft 124 includes data generated by sensors, instruments, etc. of the aircraft 124 during various phases of the flight 112. For example, the flight data 122 includes one or more entries indicating time, altitude ($H_p$), flight path angle ($\gamma$), air temperature (T), Mach number (M), aircraft mass (m), fuel flow (FF), aircraft gross weight, airspeed, heading, normal acceleration, longitudinal acceleration, lateral acceleration, pitch trim position, angle of attack, pitch attitude, roll attitude, radio transmission keying, power on each engine, thrust reverser position, auto pilot engagement status, one or more additional parameters, or a combination thereof, detected during the flight 112.

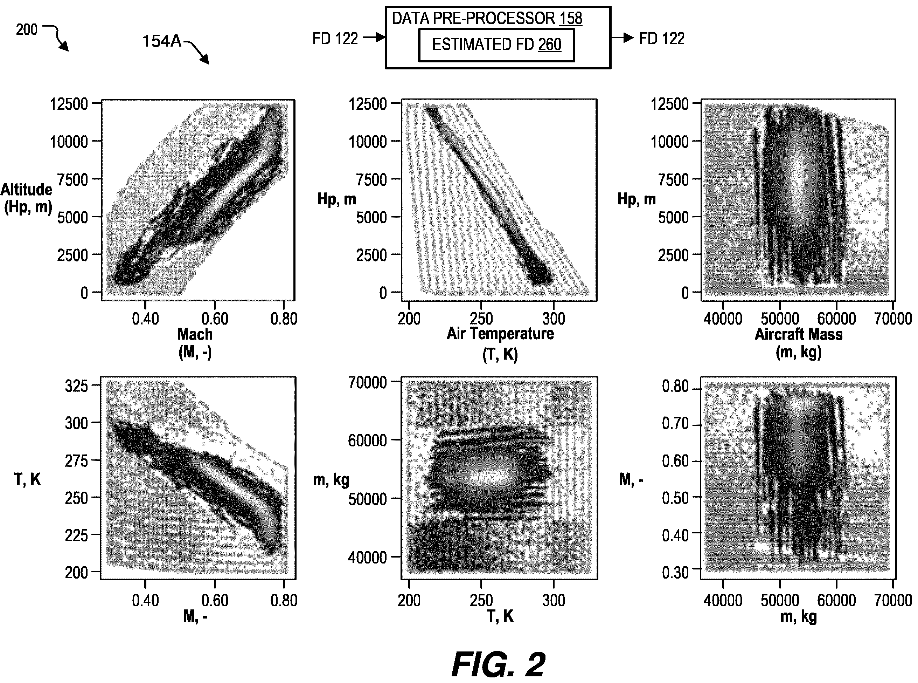

In some implementations, the flight data 122 is provided, without pre-processing, to the phase data segmentor 160. In alternative implementations, the data pre-processor 158 pre-processes the flight data 122 prior to providing the flight data 122 to the phase data segmentor 160. In some aspects, the flight data 122 includes entries corresponding to thousands of flight variables of which a few are relevant for generating the aircraft performance model 174. In some implementations, the data pre-processor 158 retains entries (or portions of entries) corresponding to flight variables that are relevant for generating any of the models of the aircraft performance model 174 and removes any remaining entries (or remaining portions), as further described with reference to FIGS. 1B and 2.

In some aspects, the flight data 122 includes entries corresponding to outliers, measurement errors, noise, or a combination thereof. In some implementations, the data pre-processor 158 discards entries corresponding to outliers, measurement errors, or both, from the flight data 122, as further described with reference to FIGS. 1B-2. In some implementations, the data pre-processor 158 applies filters to smooth the noise present in the flight data 122, as further described with reference to FIGS. 1B-2. The flight data 122 usually includes historical flight data detected during regular operation of the one or more aircraft 124. In some aspects, the flight data 122 may not cover the entire flight envelope of the aircraft type 120. As an example, the one or more aircraft 124 are generally operated in some portions of the flight envelope for efficiency and there may be no entries in the flight data 122 corresponding to other portions of the flight envelope. In some implementations, the data pre-processor 158 generates estimated flight data (e.g., synthetic flight data) corresponding to particular portions of the flight envelope that are not represented in the flight data 122 and adds the estimated flight data to the flight data 122, as further described with reference to FIGS. 1B-2. Including the estimated flight data in the flight data 122 to generate the aircraft performance model 174 can improve the precision and accuracy of the aircraft performance model 174 because the estimated flight data increases coverage of the flight data 122.

The phase data segmentor 160 groups the flight data 122 by phases for processing by the aircraft performance model 172. In an example, the phase 114A includes one of a taxi out phase, a takeoff phase, a climb phase, a cruise phase, a descent phase, an approach phase, a go around phase, a taxi in phase, one or more additional phases, or a combination thereof, and the phase 114B includes another one of the taxi out phase, the takeoff phase, the climb phase, the cruise phase, the descent phase, the approach phase, the go around phase, the taxi in phase, one or more additional phases, or a combination thereof. The phase data segmentor 160 groups the flight data 122 to generate phase data 154 corresponding to respective phases 114, as further described with reference to FIGS. 1B and 3. For example, the phase data segmentor 160 groups the flight data 122 into phase data 154A of the phase 114A, phase data 154B of the phase 114B, one or more additional sets of phase data of respective phases, or a combination thereof.

The flight data analyzer 106 applies the aircraft performance model 172 to at least a portion of the phase data 154 to generate parameter data 182, as further described with reference to FIGS. 1B and 4. In some implementations, the aircraft performance model 172 includes distinct aircraft performance models for each of the phases 114. For example, the aircraft performance model 172 includes a plurality of phase models for the phase 114A, a plurality of phase models for the phase 114B, and so on. In these implementations, at least a portion of each set of phase data 154 is processed by corresponding phase models of the aircraft performance model 172 to generate parameter data 182. For example, the flight data analyzer 106 applies a first phase model for the phase 114A to at least a portion of the phase data 154A to generate a first parameter value of a first parameter. In a particular aspect, the flight data analyzer 106 applies a second phase model for the phase 114A to the first parameter value to generate a second parameter value of a second parameter. The phase data 154A can include the first parameter value of the first parameter, the second parameter value of the second parameter, one or more additional parameter values of one or more parameters, or a combination thereof. Similarly, the flight data analyzer 106 applies the plurality of phase models for the phase 114B to at least a portion of the phase data 154B to generate the parameter data 182B. In some implementations, different portions of the phase data 154 are used by one or more of the aircraft performance model 172, the model generator 164, and the output generator 166, as described herein.

The model generator 164 generates the aircraft performance model 174 of the aircraft 142 based on the parameter data 182, and the phase data 154, as further described with reference to FIGS. 1B and 5A-5C. In some implementations, the aircraft performance model 174 corresponds to a set of polynomial equations corresponding to the phases 114 and to model parameters to be predicted. For example, the aircraft performance model 174 includes a polynomial equation corresponding to each respective one of a general fuel (F) model, an idle fuel ($F_{idle}$) model, a clean configuration drag (D) model, a non-clean configuration drag model, a throttle model (TH), a flat-rated area throttle model, temperature-rated area throttle model, a general thrust (THR) model, an idle thrust ($THR_{idle}$), one or more additional models, or a combination thereof, for each of the phases 114. To illustrate, the aircraft performance model 174 includes a first polynomial equation corresponding to a general fuel (F) model for the phase 114A, a second polynomial equation corresponding to a general fuel (F) model for the phase 114B, a third polynomial equation corresponding to an idle fuel ($F_{idle}$) model for the phase 114A, a fourth polynomial equation corresponding to an idle fuel ($F_{idle}$) model for the phase 114B, etc. Polynomial equations are provided as an illustrative example of models. In other examples, other types of equations, tables, etc. that relate performance variables and their dependencies can be used as models.

A model (e.g., a polynomial equation, another type of equation, tables, etc.) has coefficients applied to input variables to generate a predicted value of a parameter. The input variables can include one or more flight variables indicated by the phase data 154, one or more model parameters indicated by the parameter data 182, or a combination thereof. The parameter can include a throttle position, thrust, drag, fuel flow rate, or a combination thereof. In a particular aspect, a throttle model (TH) is used to generate a throttle position prediction, a fuel model is used to generate a fuel flow rate prediction, a a drag model is used to generate a drag prediction, a thrust model is used to generate a thrust prediction, etc. The model generator 164 uses regression techniques (e.g., linear regression) to determine values of coefficients of the models (e.g., polynomial equations, another type of equations, tables, etc.) of the aircraft performance model 174, as further described with reference to FIG. 5A.

In a particular aspect, the model generator 164 iteratively applies the aircraft performance model 174 to input variable values indicated by at least a portion of the phase data 154 to generate predicted parameter values, and updates the aircraft performance model 174 based on a difference between the predicted parameter values and corresponding actual parameter values indicated by the phase data 154, as further described with reference to FIG. 5B. For example, the model generator 164 iteratively updates values of coefficients of the aircraft performance model 174 (e.g., of one or more polynomial equations, other types of equations, tables, etc.) until the difference is below a parameter difference threshold, at least a threshold count of iterations are performed, or both.

The output generator 166 generates an output 176 based on the aircraft performance model 174, as further described with reference to FIGS. 6A and 6B. In some aspects, the output 176 is associated with a planned flight of the aircraft 142. In an illustrative example, the output generator 166, based on determining that a difference between the aircraft performance model 172 and the aircraft performance model 174 is greater than a model difference threshold, schedules inspection of the aircraft 142 to occur prior to the planned flight, generates an alert, or both. For example, the output 176 includes a request for the inspection, the alert, or both. In another example, the output generator 166 generates, based on the aircraft performance model 174, the output 176 indicating flight planning data (e.g., a fuel consumption estimate) for the planned flight, flight data during the planned flight (e.g., take off calculations, on board fuel calculations, etc.), flight data after the planned flight (e.g., post flight fuel analytics), simulation data of the aircraft 142, etc.

The output generator 166 provides the output 176 to the one or more devices 144. In some examples, the one or more devices 144 include a user device, a ground control device, an electronic flight bag, an airline server, a display device, a communication device, or a combination thereof. To illustrate, the one or more devices 144 can include a display device in the aircraft 142. In some aspects, the output generator 166 sends a portion of the output 176 (e.g., the request to schedule the inspection) to one of the one or more devices 144 and sends another portion of the output 176 (e.g., the alert) to another one of the one or more devices 144.

The aircraft performance model 174 is a closer representation of performance of the aircraft 142 (as compared to the aircraft performance model 172) because the aircraft performance model 174 is based on historical flight data (e.g., the flight data 122). As a result, predicted performance of the aircraft 142 (e.g., as indicated by the output 176) that is generated based on the aircraft performance model 174 has higher precision and accuracy. For example, a fuel consumption estimate based on the aircraft performance model 174 has higher reliability and so less extra fuel can be loaded on the aircraft 142 prior to a planned flight to account for any prediction inaccuracies.

The device 102, the storage device 140, the aircraft 142, and the one or more devices 144 are shown as separate from each other as an illustrative implementation In other implementations, two or more of the device 102, the storage device 140, the aircraft 142, or the one or more devices 144 can be combined. In some examples, the storage device 140 is external to the device 102. In other examples, the storage device 140 is integrated in the device 102. In some examples, the storage device 140 corresponds to or is included in a server, an external memory, a distributed storage system, or a combination thereof. In some examples, the one or more devices 144 are external to the device 102, the aircraft 142, or both. In other examples, the one or more devices 144 are integrated in the device 102, the aircraft 142, or both. In some examples, the device 102 is external to the aircraft 142. In other examples, the device 102 is integrated in the aircraft 142.

Although the data pre-processor 158, the phase data segmentor 160, the aircraft performance model 172, the model generator 164, and the output generator 166 are depicted as separate components, in other implementations the described functionality of two or more of the data pre-processor 158, the phase data segmentor 160, the aircraft performance model 172, the model generator 164, and the output generator 166 can be performed by a single component. In some implementations, each of the data pre-processor 158, the phase data segmentor 160, the aircraft performance model 172, the model generator 164, and the output generator 166 can be represented in hardware, such as via an application-specific integrated circuit (ASIC) or a field-programmable gate array (FPGA), or the operations described with reference to the elements may be performed by a processor executing computer-readable instructions.

Although FIG. 1A depicts the flight data analyzer 106 including the data pre-processor 158, in some implementations the flight data analyzer 106 does not include the data pre-processor 158 and provides the flight data 122, without pre-processing, to the phase data segmentor 160. Although FIG. 1A depicts the flight data analyzer 106 including the output generator 166, in some implementations the output generator 166 can be external to the flight data analyzer 106. For example, the flight data analyzer 106 can provide the aircraft performance model 174 to the output generator 166 that is integrated in the one or more devices 144.

Referring to FIG. 1B, a diagram 150 of an illustrative example of operations performed by the flight data analyzer 106 is shown. The operations include data ingestion 190, data preparation 192, tailoring process 194, and model evaluation 196.

During the data ingestion 190, the data pre-processor 158 obtains the flight data 122 corresponding to the aircraft type 120, as described with reference to FIG. 1A. The data pre-processor 158 also generates estimated flight data based on the flight data 122, as further described with reference to FIG. 2.

During the data preparation 192, the data pre-processor 158 cleans the flight data 122 (that includes the estimated flight data), as further described with reference to FIG. 2. For example, the data pre-processor 158 removes erroneous data points, outliers, data points corresponding to redundant information, or a combination thereof. As another example, the data pre-processor 158 removes data points corresponding to flight variables that are not relevant for model generation. The data pre-processor 158 performs filtering of the cleaned version of the flight data 122. For example, the data pre-processor 158 uses filtering to remove noise from the flight data 122. In some aspects, the data pre-processor 158 verifies that the flight data 122 fulfills operational limitations. For example, the data pre-processor 158 removes any data points in the flight data 122 that do not satisfy operational limitations of the aircraft type 120. To illustrate, the data pre-processor 158 removes any data points that are outside the flight envelope of the aircraft type 120.

In some implementations, the data pre-processor 158 performs data augmentation of the flight data 122. For example, the data pre-processor 158 adds the estimated flight data to the flight data 122. The data pre-processor 158 provides the updated version of the flight data 122 to the phase data segmentor 160. In some implementations, the phase data segmentor 160 performs phase data generation. For example, the phase data segmentor 160 groups the flight data 122 by the phases 114 to generate the phase data 154, as further described with reference to FIG. 3.

During the tailoring process 194, the flight data analyzer 106 applies the aircraft performance model 172 to at least a portion of the phase data 154 to generate the parameter data 182, as further described with reference to FIG. 4. The model generator 164 generates the aircraft performance model 174 based on the parameter data 182, as further described with reference to FIGS. 5A-5C. The aircraft performance model 174 includes a plurality of models, such as a general fuel (F) model, an idle fuel ($F_{idle}$) model, a clean configuration drag (D) model, a throttle model (TH), a flat-rated area throttle model, temperature-rated area throttle model, a general thrust (THR) model, an idle thrust ($THR_{idle}$), one or more additional models, or a combination thereof, for each of the phases 114. In some implementations, the model generator 164 uses regression techniques (e.g., linear regression) to fit the plurality of models. For example, the model generator 164 uses linear regression to determine coefficients of a general fuel (F) model based on the parameter data 182 and the phase data 154, as further described with reference to FIG. 5A. In a particular aspect, the model generator 164 iteratively updates one or more of the plurality of models of the aircraft performance model 174 until stop criteria are satisfied, as further described with reference to FIG. 5B. In a particular aspect, the data pre-processor 158 generates an idle fuel model ($F_{idle}$) subsequent to determining that the stop criteria are satisfied.

During the model evaluation 196, the output generator 166 evaluates the aircraft performance model 174, as further described with reference to FIGS. 6A and 6B. For example, the output generator 166 determines whether a first difference between the aircraft performance model 172 and the aircraft performance model 174 when applied to at least a portion of the flight data 122 is greater than a model difference threshold. In another example, the output generator 166 determines whether a second difference between the aircraft performance model 172 and the aircraft performance model 174 when applied to at least a portion of the estimated flight data is greater than a model difference threshold. In a particular aspect, the output generator 166, in response to determining that each of the first difference and the second difference is less than the model difference threshold, generates the output 176 indicating that the aircraft performance model 174 passes the evaluation. Alternatively, the output generator 166, in response to determining that either of the first difference or the second difference is greater than the model difference threshold, generates the output 176 indicating that the aircraft performance model 174 fails the evaluation, that an inspection of the aircraft 142 is to be scheduled, or both.

Referring to FIG. 2, a diagram 200 of an example of data augmentation performed by a particular implementation of the data pre-processor 158 is shown. In some aspects, the data pre-processor 158 is configured to clean, smooth, augment, add estimated flight data 260, or a combination thereof, to the flight data 122. The diagram 200 also includes an example of the phase data 154A included in the flight data 122.

The flight data 122 includes data generated by sensors or other instruments during the flights 112 of the one or more aircraft 124. The flight data 122 can include quick access recorded data (QAR). In some implementations, the data pre-processor 158 cleans the flight data 122. The flight data 122 can include entries corresponding to thousands of flight variables of which a few are relevant for generating the aircraft performance model 174. In some implementations, the data pre-processor 158 selects flight variables that are relevant for generating any of the models of the aircraft performance model 174. To illustrate, the data pre-processor 158 selects flight variables that are relevant for generating a general thrust model, a flat-rated area throttle model, a temperature-rated area throttle model, a clean configuration drag model, a general fuel model, an idle thrust model, an idle fuel model, one or more additional models, or a combination thereof.

The relevant parameters can be indicated by a user input, a configuration setting, default data, or a combination thereof. In some examples, the data pre-processor 158 determines correlations between the flight variables indicated by the flight data 122 and a target parameter that is to be modeled by the aircraft performance model 174. As an illustrative example, the data pre-processor 158, in response to determining that there is low (e.g., no) correlation between the auto pilot engagement variable and fuel flow, determines that the auto pilot engagement variable is not relevant for generating the general fuel model. In some implementations, the data pre-processor 158 retains entries (or portions of entries) corresponding to flight variables that are relevant for determining any of the models of the aircraft performance model 174 and removes any remaining entries (or remaining portions).

The flight data 122 can include entries corresponding to outliers, measurement errors, noise, redundant information, or a combination thereof. In some implementations, the data pre-processor 158 discards entries corresponding to outliers, measurement errors, redundant information, or a combination thereof. In some implementations, the data pre-processor 158 applies filters (e.g., Savitzky-Golay filters) to smooth the noise present in the flight data 122. For example, the filters may smooth the flight data 122 without distorting the signal tendency. To illustrate, the smoothing can be achieved by fitting subsets of contiguous data points with low-degree polynomials using linear least squares. In some aspects, the data pre-processor 158 can use convolution to apply the smoothing.

In some implementations, the data pre-processor 158 aligns flight variables that are associated with various detection intervals in the flight data 122. To illustrate, the flight data 122 indicates a first air temperature at a first time (e.g., 1:10 PM), a first altitude at a second time (e.g., 1: 12 PM), a second altitude at a third time (e.g., 1: 14 PM), a second air temperature at a fourth time (e.g., 1: 15 PM), and a third altitude at a fifth time (e.g., 1: 16 PM). In some implementations, the data pre-processor 158 updates the flight data 122 to indicate that any altitude readings subsequent to a particular air temperature reading and prior to a next temperature reading are associated with the earlier air temperature reading. For example, the first air temperature is associated with each of the first altitude at the second time (e.g., 1: 12 PM) and the second altitude at the third time (e.g., 1: 14 PM), and the second air temperature is associated with the third altitude at the fifth time (e.g., 1:16).

In some implementations, the data pre-processor 158 assumes that the air temperature changes linearly (e.g., at a constant rate) from the first air temperature at the first time (e.g., 1: 10 PM) to the second air temperature at the fourth time (e.g., 1: 15 PM), and updates the flight data 122 to indicate that any altitude readings subsequent to a particular air temperature reading and prior to a next air temperature reading are associated with air temperatures that are between the air temperature indicated by the particular air temperature reading and the air temperature indicated by the next air temperature reading. For example, the data pre-processor 158 updates the flight data 122 to indicate that the first altitude at the second time (e.g., 1: 12 PM) is associated with an air temperature that is between the first air temperature at the first time (e.g., 1: 10 PM) and the second air temperature at the second time (e.g., 1: 15 PM).

The flight data 122 typically includes data points corresponding to normal operation of the one or more aircraft 124. The flight data 122 may include few or no data points corresponding to limits of a flight envelope of the aircraft type 120 and few or no data points corresponding to one or more portions of the flight envelope that are associated with unusual flight operation. In the example of the phase data 154A, the limits of the flight envelope are depicted with dashed lines. In a particular aspect, the limits of the flight envelope correspond to hyperplanes that define the flight envelope.

The data pre-processor 158 generates estimated flight data 260 including first estimated flight data and second estimated flight data. The first estimated flight data corresponds to the limits (e.g., borders) of the flight envelope. Additionally, or in the alternative, the data pre-processor 158 identifies one or more portions of the flight envelope that are not represented in the flight data 122, and generates the second estimated flight data corresponding to the identified portions. In a particular implementation, the second estimated flight data is uniformly distributed over the identified portions. In some implementations, the first estimated flight data is half of estimated flight data generated by the data pre-processor 158, and the second estimated flight data is the remaining half of the estimated flight data. In some examples, the data pre-processor 158 uses a probability density function to analyze the flight data 122 to determine the first estimated flight data, the second estimated flight data, or a combination thereof. To illustrate, the data pre-processor 158 can use Gaussian kernels to estimate the probability density function of multi-variate data.

The data pre-processor 158 adds the estimated flight data 260 to the flight data 122. Including the estimated flight data 260 in the flight data 122 improves the stability of the aircraft performance model 174 and causes the output of the aircraft performance model 174 to be valid over the complete flight envelope, including flight conditions that are not represented by the flight data 122 prior to adding the estimated flight data 260.

The various operations (e.g., cleaning, smoothing, aligning, adding the estimated flight data 260, or a combination thereof) described herein to update the flight data 122 can occur in different orders in various implementations. For example, in some implementations, the data pre-processor 158 updates the flight data 122 to retain the relevant entries (or portions of entries) and to remove remaining entries (or portions of entries). The data pre-processor 158 updates the flight data 122 by removing the erroneous measurements and the outliers followed by smoothing the flight data 122. The data pre-processor 158, subsequent to smoothing the flight data 122, determines the estimated flight data 260 based on the flight data 122 and adds the estimated flight data 260 to the flight data 122. The data pre-processor 158 aligns the flight variables in the flight data 122. In some other implementations, the data pre-processor 158 retains the relevant entries and removes the remaining entries from the flight data 122, determines the estimated flight data 260 based on the flight data 122, and adds the estimated flight data 260 to the flight data 122. The data pre-processor 158, subsequent to adding the estimated flight data 260 to the flight data 122, removes entries corresponding to erroneous measurements or outliers and then smooths the flight data 122. Various other orders of operation are possible without limitation.

Referring to FIG. 3, a diagram 300 of a particular implementation of the phase data segmentor 160 is shown. The flight data 122 includes flight data 352 of the one or more flights 112. For example, the flight data 122 includes flight data 352A, flight data 352B, flight data 352C, and flight data 352D of a flight 112A, a flight 112B, a flight 112C, and a flight 112D, respectively. The flight data 122 including flight data of four flights is provided as an illustrative example. In other examples, the flight data 122 can include flight data of fewer than four flights or more than four flights.

Flight data 322 of a flight 112 includes first flight data detected during the phase 114A, second flight data detected during the phase 114B, third flight data detected during a phase 114C, one or more sets of flight data detected during one or more additional phases, or a combination thereof. For example, the flight data 352A includes flight data 322AA, flight data 322AB, and flight data 322AC corresponding to the phase 114A, the phase 114B, and the phase 114C, respectively.

The reference number "322" is used herein for a portion of the flight data 122. The first letter after the reference number "322" denotes a flight during which the portion of flight data is detected, and the second letter after the reference number "322" denotes a phase of the flight during which the portion of flight data is detected. As an example, the flight data 322AB is detected during the flight 112A, specifically during the phase 114B of the flight 112A. As another example, flight data 322BA is detected during the flight 112B, specifically during the phase 114A of the flight 112B.

The phase data segmentor 160 groups the flight data 122 by phases 114 to generate phase data 154. For example, the phase data segmentor 160 groups the flight data 322AA, the flight data 322BA, the flight data 322CA, the flight data 322DA, one or more additional sets of flight data corresponding to the phase 114A, or a combination thereof, to generate the phase data 154A. As another example, the phase data segmentor 160 groups the flight data 322AB, the flight data 322BB, the flight data 322CB, the flight data 322DB, one or more additional sets of flight data corresponding to the phase 114B, or a combination thereof, to generate the phase data 154A.

Referring to FIG. 4, a diagram 400 of an illustrative example of using the aircraft performance model 172 to determine the parameter data 182 is shown. The aircraft performance model 172 includes models for the phases 114. For example, the aircraft performance model 172 includes throttle (TH) models 472, general thrust (THR) models 474, one or more additional models, or a combination thereof, for the phases 114.

The aircraft performance model 172 including two types of models is depicted for ease of illustration. The aircraft performance model 172 can include fewer than two types of models or more than two types of models. For example, the aircraft performance model 172 can include the throttle (TH) models 472, the general thrust (THR) models 474, lift coefficient (L) models, clean and non-clean configuration drag (D) models, idle thrust ($THR_{idle}$) models, general fuel (F) models, one or more additional types of models, or a combination thereof, for the phases 114.

In some aspects, each type of model includes a plurality of models for the phases 114. For example, the throttle (TH) models 472 include a throttle (TH) model 472A for the phase 114A, a throttle (TH) model 472B for the phase 114B, another throttle (TH) model for the phase 114C, one or more additional throttle (TH) models for corresponding phases 114, or a combination thereof. Similarly, the general thrust (THR) models 474 include a general thrust (THR) model 474A for the phase 114A, a general thrust (THR) model 474B for the phase 114B, another general thrust (THR) model for the phase 114C, one or more additional general thrust (THR) models for corresponding phases 114, or a combination thereof.

In some implementations, each of the models corresponds to one or more polynomial equations of the form:

$$Y = \beta_0 + \beta_1 x^{(1)} + \beta_2 x^{(2)} + \ldots + \beta_n x^{(n)}, \qquad\qquad \text{Equation 1}$$

where Y corresponds to a predicted parameter value of a model parameter, n corresponds to a count of input variables, $x^{(i)}$ denotes a $j^{th}$ input variable, and $\beta_j$ denotes a coefficient of the $j^{th}$ input variable. A first order polynomial equation is used as an illustrative example of a model. In other examples, a higher order polynomial equation, another type of equation, a table, or another representation can be used as a model. To illustrate, a particular input variable can have an exponent that is greater than or equal to 1.

The input variables include one or more flight variables (e.g., altitude ($H_p$), flight path angle ($\gamma$), air temperature (T), Mach number (M), aircraft mass (m), fuel flow (FF), and/or one or more additional flight variables), one or more model parameters predicted by another model, or a combination thereof.

In an example, each of the throttle (TH) models 472 is applied to input variables 406. To illustrate, the input variables 406 correspond to $x^{(1)}, \ldots, x^{(n)}$ of polynomial equations corresponding to the throttle (TH) models 472. The throttle (TH) model 472A includes throttle (TH) coefficient values (CV) 402A. For example, the throttle (TH) coefficient values (CV) 402A correspond to $\beta_0, \ldots, \beta_n$ of a polynomial equation corresponding to the throttle (TH) model 472A. The throttle (TH) model 472B includes throttle (TH) coefficient values (CV) 402B. For example, the throttle (TH) coefficient values (CV) 402B correspond to $\beta_0, \ldots, \beta_n$ of a polynomial equation corresponding to the throttle (TH) model 472B.

As another example, each of the general thrust (THR) models 474 is applied to input variables 408. To illustrate, the input variables 408 correspond to $x^{(1)}, \ldots, x^{(n)}$ of polynomial equations corresponding to the general thrust (THR) models 474. In some aspects, the input variables 408 can be the same as, overlapping, or distinct from the input variables 406.

The general thrust (THR) model 474A includes general thrust (THR) coefficient values 404A. For example, the general thrust (THR) coefficient values 404A correspond to $\beta_0, \ldots, \beta_n$ of a polynomial equation corresponding to the general thrust (THR) model 474A. The general thrust (THR) model 474B includes general thrust (THR) coefficient values 404B. For example, the general thrust (THR) coefficient values 404B correspond to $\beta_0, \ldots, \beta_n$ of a polynomial equation corresponding to the general thrust (THR) model 474B.

The flight data analyzer 106 of FIG. 1A applies the aircraft performance model 172 to at least a portion of the phase data 154 to generate the parameter data 182. For example, the flight data analyzer 106 applies each of the throttle (TH) model 472A, the general thrust (THR) model 474A, one or more additional models for the phase 114A, or a combination thereof, to at least a portion of the phase data 154A to generate the parameter data 182A.

In an example, the flight data 322AA of the phase data 154A indicates values 407 of flight variables 416, and values 409 of flight variables 418. In some aspects, the flight variables 416 include one or more of the flight variables 418. In some aspects, one or more of the flight variables 416 are not included in the flight variables 418. In some aspects, one or more of the flight variables 418 are not included in the flight variables 416.

The flight data analyzer 106 applies the throttle (TH) model 472A to the input variables 406. For example, the flight data analyzer 106, in response to determining that the input variables 406 include the flight variables 416, uses the throttle (TH) coefficient values (CV) 402A as $\beta_0, \ldots, \beta_n$ and the values 407 as $x^{(1)}, \ldots, x^{(n)}$ in one or more polynomial equations representing the throttle (TH) model 472A to generate one or more parameter values 412A of one or more throttle (TH) model parameters 420 (e.g., Y).

The flight data analyzer 106 applies the general thrust (THR) model 474A to the input variables 408. In some aspects, the input variables 408 include the flight variables 418 and the throttle (TH) model parameters 420. In these aspects, the flight data analyzer 106 uses the general thrust (THR) coefficient values 404A as $\beta_0, \ldots, \beta_n$, and the values 409 and the one or more parameter values 412A as $x^{(1)}, \ldots, x^{(n)}$, in one or more polynomial equations representing the general thrust (THR) model 474A to generate one or more parameter values 414A of one or more general thrust (THR) model parameters 430 (e.g., Y). The parameter data 182A indicates the one or more parameter values 412A of the one or more throttle (TH) model parameters 420, and one or more parameter values 414A of the one or more general thrust (THR) model parameters 430. In a particular aspect, a particular parameter value 412A of a throttle (TH) model parameter 420 indicates a particular throttle position. In a particular aspect, a particular parameter value 414A of a general thrust (THR) model parameter 430 indicates a particular general thrust.

Similarly, the flight data analyzer 106 applies each of the throttle (TH) model 472B, the general thrust (THR) model 474B, one or more additional models for the phase 114B, or a combination thereof, to at least a portion of the phase data 154B to generate the parameter data 182B.

In an example, the flight data 322AB of the phase data 154B indicates values 417 of the flight variables 416, and values 419 of flight variables 418. The flight data analyzer 106 applies the throttle (TH) model 472B to the input variables 406. For example, the flight data analyzer 106, in response to determining that the input variables 406 include the flight variables 416, uses the throttle (TH) coefficient values (CV) 402B as $\beta_0, \ldots, \beta_n$ and the values 417 as $x^{(1)}, \ldots, x^{(n)}$ in one or more polynomial equations representing the throttle (TH) model 472B to generate one or more parameter values 412B of the one or more throttle (TH) model parameters 420 (e.g., Y).

**EP 4 343 609 B1**

The flight data analyzer 106 applies the general thrust (THR) model 474B to the input variables 408. In some aspects, the input variables 408 include the flight variables 418 and the throttle (TH) model parameters 420. In these aspects, the flight data analyzer 106 uses the general thrust (THR) coefficient values 404B as $\beta_0, ..., \beta_n$, and the values 419 and the one or more parameter values 412B as $x^{(1)}, ..., x^{(n)}$ in one or more polynomial equations representing the general thrust (THR) model 474B to generate one or more parameter values 414B of one or more general thrust (THR) model parameters 430 (e.g., Y). The parameter data 182B indicates the one or more parameter values 412B of the one or more throttle (TH) model parameters 420, and the one or more parameter values 414B of the one or more general thrust (THR) model parameters 430.

The same type of models for different phases applied to the same input variables is provided as an illustrative example. In some examples, the same type of models for different phases can be applied to different input variables. For example, the general thrust (THR) model 474A for the phase 114A can be applied to first input variables that are distinct from second input variables of the general thrust (THR) model 474B for the phase 114B.

Referring to FIG. 5A, a diagram 500 of a particular implementation of the model generator 164 is shown. The model generator 164 obtains the parameter data 182 and the phase data 154.

In an example, the parameter data 182 includes at least the parameter data 182A and the parameter data 182B of the phase 114A and the phase 114B, respectively. The phase data 154 includes at least the flight data 322AA and the flight data 322AB of the phase 114A and the phase 114B, respectively. In a particular aspect, the model generator 164 uses the same portion of the phase data 154 that is used to generate the parameter data 182. For example, in this aspect, the flight data 322AA and the flight data 322AB are used to generate the parameter data 182A and the parameter data 182B, respectively.

The model generator 164 generates the aircraft performance model 174 based on the parameter data 182 and the phase data 154. In an example, the model generator 164 generates general fuel (F) models 572 of the aircraft performance model 174 for the phases 114. To illustrate, the general fuel (F) models 572 include a general fuel (F) model 572A for the phase 114A, a general fuel (F) model 572B for the phase 114B, one or more additional general fuel (F) models corresponding to respective phases, or a combination thereof.

In a particular aspect, each of the general fuel (F) models 572 corresponds to a respective polynomial equation of the form of Equation 1. In an example, each of the general fuel (F) models 572 is applied to input variables 506. To illustrate, the input variables 506 correspond to $x^{(1)}, ..., x^{(n)}$ of polynomial equations corresponding to the general fuel (F) models 572. The general fuel (F) model 572A includes general fuel (F) coefficient values (CV) 502A. For example, the general fuel (F) coefficient values (CV) 502A correspond to $\beta_0, ..., \beta_n$ of a polynomial equation corresponding to the general fuel (F) model 572A. The general fuel (F) model 572B includes general fuel (F) coefficient values (CV) 502B. For example, the general fuel (F) coefficient values (CV) 502B correspond to coefficients (e.g., $\beta_0, ..., \beta_n$) of a polynomial equation corresponding to the general fuel ($C_F$) model 572B. Polynomial equations representing a model is provided as an illustrative example. In other examples, a model can be represented using another type of equation, a table, another representation, or a combination thereof. The model can include coefficient values (CV) that are applied to input variables to determine a predicted value.

In some implementations, the model generator 164 uses regression techniques (e.g., linear regression) to determine the general fuel (F) coefficient values (CV) 502. In an example, the input variables 506 include flight variables 516, the one or more throttle (TH) model parameters 420, the one or more general thrust (THR) model parameters 430, one or more additional model parameters indicated by the parameter data 182A, or a combination thereof.

The flight data 322AA indicates values 507 of the flight variables 516, and actual values 512A of general fuel (F) model parameters 520. In a particular aspect, an actual value 512A of a general fuel (F) model parameter 520 indicates a general fuel flow rate. The model generator 164 uses regression techniques (e.g., linear regression) to determine the general fuel (F) coefficient values (CV) 502A that correspond to the general fuel (F) model parameters 520 having the actual values 512A, and the input variables 506 having the values 507 of the flight variables 516, the parameter values 412A of the one or more throttle (TH) model parameters 420, the parameter values 414A of the one or more general thrust (THR) model parameters 430, one or more additional model parameter values indicated by the parameter data 182A, or a combination thereof.

In a particular aspect, the model generator 164 uses a best fit technique to generate the general fuel (F) coefficient values (CV) 502, and thus the general fuel (F) model 572A approximates the relationships between the input variables 506 and the general fuel (F) model parameters 520 for the phase 114A.

Similarly, the model generator 164 generates the general fuel (F) model 572B for the phase 114B. As an example, the flight data 322AA indicates values 517 of the flight variables 516, and actual values 512B of general fuel (F) model parameters 520. The model generator 164 uses regression techniques (e.g., linear regression) to determine the general fuel (F) coefficient values (CV) 502B that correspond to the general fuel (F) model parameters 520 having the actual values 512B, and the input variables 506 having the values 517 of the flight variables 516, the parameter values 412B of the one or more throttle (TH) model parameters 420, the parameter values 414B of the one or more general thrust (THR) model parameters 430, one or more additional model parameter values indicated by the parameter data 182B, or a combination thereof.

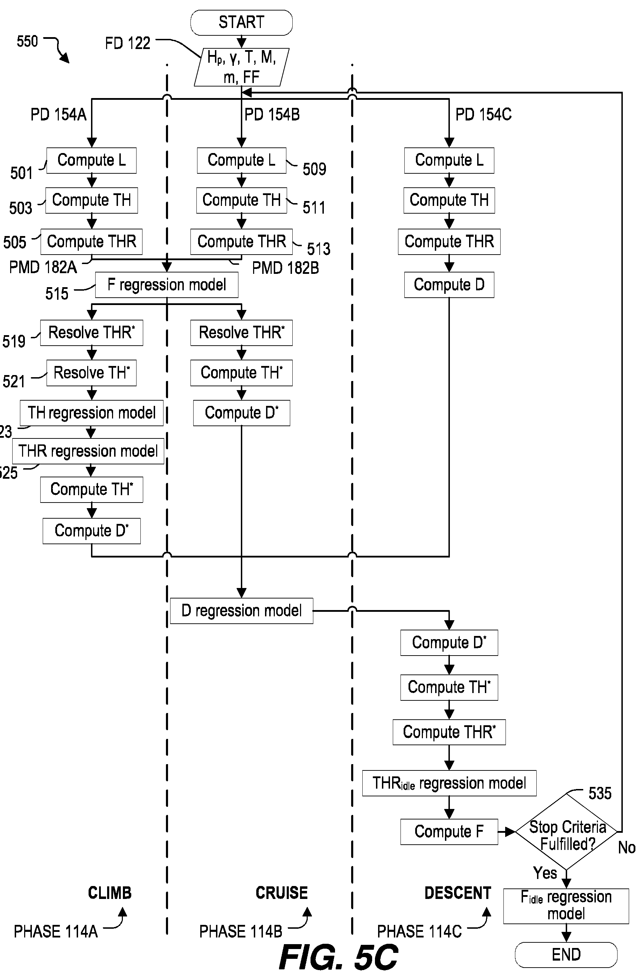

In some examples, the model generator 164 generates one or more additional models of the aircraft performance model 174. For example, the one or more additional models can include a general thrust (THR) model, a throttle (TH) model, a flat-rated area throttle model, a temperature-rated area throttle model, a clean configuration drag (D) model, an idle thrust model ($THR_{idle}$) model, an idle fuel ($F_{idle}$), one or more additional models, or a combination thereof, for the phases 114, as further described with reference to FIG. 5C.

Referring to FIG. 5B, a diagram 530 of a particular implementation of the model generator 164 is shown. The model generator 164 iteratively updates one or more models of the aircraft performance model 174 based on the phase data 154. For example, the model generator 164 iteratively updates the general fuel (F) models 572 based on the phase data 154.

In some aspects, the model generator 164 uses the general fuel (F) models 572 to determine parameter values 514 of the general fuel (F) model parameters 520, and updates the general fuel (F) coefficient values 502 based on a comparison of the parameter values 514 (e.g., predicted values) and actual values 522 of the general fuel (F) model parameters 520 indicated by the phase data 154.

In some implementations, the model generator 164 uses portions of the phase data 154 to update the aircraft performance model 174 that have not been previously used to generate or update the aircraft performance model 174. In an example, the flight data 322BA indicates values 527 of the flight variables 516 and actual values 522A of the general fuel (F) model parameters 520 for the phase 114A. The model generator 164 applies the general fuel (F) coefficient values 502A of the general fuel (F) model 572A to the input variables 506 having the values 527 of the flight variables 516, one or more model parameter values generated using one or more other models of the aircraft performance model 174 for the phase 114A, or a combination thereof, to generate parameter values 514A (e.g., predicted values) of the general fuel (F) model parameters 520.

The model generator 164 updates the general fuel (F) model 572A based on a comparison of the parameter values 514A (e.g., predicted values) and the actual values 522A of the general fuel (F) model parameters 520 for the phase 114A. For example, the model generator 164, in response to determining that a difference (e.g., an average difference) between the parameter values 514A and the actual values 522A is greater than a difference threshold 566 and a count of iterations is less than a count threshold 568, updates the general fuel coefficient values 502A based on the difference, increments the count of iterations, and updates the parameter values 514A based on the updated general fuel coefficient values 502A. Alternatively, the model generator 164, in response to determining that the difference is less than or equal to the difference threshold 566 or that the count of iterations is greater than or equal to the count threshold 568, determines that updates of the general fuel (F) model 572A are complete.

As another example, the flight data 322BB indicates values 537 of the flight variables 516 and actual values 522B of the general fuel (F) model parameters 520 for the phase 114B. The model generator 164 applies the general fuel (F) coefficient values 502B of the general fuel (F) model 572B to the input variables 506 having the values 537 of the flight variables 516, one or more model parameter values generated using one or more other models of the aircraft performance model 174 for the phase 114B, or a combination thereof, to generate parameter values 514B (e.g., predicted values) of the general fuel (F) model parameters 520. The model generator 164 updates the general fuel (F) model 572B based on a comparison of the parameter values 514B (e.g., predicted values) and the actual values 522B of the general fuel (F) model parameters 520 for the phase 114B. Similarly, the model generator 164 can update one or more additional models of the aircraft performance model 174 based on the phase data 154.

Referring to FIG. 5C, a diagram 550 is shown of an illustrative example of operations performed by the flight data analyzer 106. The phase 114A, the phase 114B, and the phase 114C correspond to a climb phase, a cruise phase, and a descent phase, respectively.

The flight data analyzer 106 obtains the flight data 122 (e.g., altitude ($H_p$), flight path angle ($\gamma$), air temperature (T), Mach number (M), aircraft mass (m), and fuel flow (FF)). The phase data segmentor 160 of FIG. 1A groups the flight data 122 by the phases 114 to generate the phase data 154. For example, the phase data segmentor 160 generates the phase data 154A, the phase data 154B, and the phase data 154C corresponding to the phase 114A (e.g., the climb phase), the phase 114B (e.g., the cruise phase), and the phase 114C (e.g., the descent phase), respectively.

The flight data analyzer 106 applies the aircraft performance model 172 to the phase data 154A to determine the parameter data 182A. For example, at 501, the flight data analyzer 106 performs a compute operation to determine first parameter values of first model ($C_L$) parameters. To illustrate, the flight data analyzer 106 applies the aircraft performance model 172 to the phase data 154A to generate the first parameter values of the first model ($C_L$) parameters.

At 503, the flight data analyzer 106 performs a compute operation to determine second parameter values of throttle (TH) model parameters. For example, the flight data analyzer 106 applies the aircraft performance model 172 to the phase data 154A, the first parameter values, or a combination thereof, to generate the second parameter values of the throttle (TH) model parameters.

At 505, the flight data analyzer 106 performs a compute operation to determine third parameter values of general thrust (THR) model parameters. For example, the flight data analyzer 106 applies the aircraft performance model 172 to the phase data 154A, the first parameter values, the second parameter values (determined at 503), or a combination thereof, to generate third parameter values of general thrust (THR) model parameters. The parameter data 182A indicates the first parameter values (determined at 501), the second parameter values (determined at 503), the third parameter values (determined at 505), or a combination thereof.

Similarly, the flight data analyzer 106 applies the aircraft performance model 172 to the phase data 154B to determine the parameter data 182B. For example, at 509, the flight data analyzer 106 performs a compute operation to determine first parameter values of the first model ($C_L$) parameters for the phase 114B. To illustrate, the flight data analyzer 106 applies the aircraft performance model 172 to the phase data 154B to generate the first parameter values of the first model ($C_L$) parameters.

At 511, the flight data analyzer 106 performs a compute operation to determine second parameter values of the throttle (TH) model parameters for the phase 114B. For example, the flight data analyzer 106 applies the aircraft performance model 172 to the phase data 154B, the first parameter values (determined at 509), or a combination thereof, to generate the second parameter values of the throttle (TH) model parameters.

At 513, the flight data analyzer 106 performs a compute operation to determine third parameter values of the general thrust (THR) model parameters for the phase 114B. For example, the flight data analyzer 106 applies the aircraft performance model 172 to the phase data 154B, the first parameter values (determined at 509), the second parameter values (determined at 511), or a combination thereof, to generate third parameter values of general thrust (THR) model parameters. The parameter data 182B indicates the first parameter values (determined at 509), the second parameter values (determined at 511), the third parameter values (determined at 513), or a combination thereof.

At 515, the model generator 164 uses regression techniques to determine the general fuel (F) models 572, as described with reference to FIG. 5A. For example, the model generator 164 determines the general fuel (F) model 572A based on the parameter data 182A, the phase data 154A, or both, and the general fuel (F) model 572B based on the parameter data 182B, the phase data 154B, or both.

At 519, the model generator 164 performs a resolve operation to determine updated first parameter values of the general thrust (THR) model parameters. For example, the model generator 164 applies the general fuel (F) model 572A (determined at 515) to the phase data 154A to determine first parameter values of the general fuel (F) model parameters 520, and applies the aircraft performance model 172 to the first parameter values, the phase data 154A, or both, to determine the updated first parameter values of the general thrust (THR) model parameters.

At 521, the model generator 164 performs a resolve operation to determine updated first parameter values of the throttle (TH) model parameters. For example, the model generator 164 applies the aircraft performance model 172 to the updated first parameter values (determined at 519), the phase data 154A, or both, to determine updated second parameter values of the throttle (TH) model parameters.

At 523, the model generator 164 uses regression techniques to determine a throttle (TH) model for the phase 114A based on the parameter data 182A, the phase data 154A, the updated first parameter values (determined at 519), the updated second parameter values (determined at 521), or a combination thereof.

At 525, the model generator 164 uses regression techniques to determine a general thrust (THR) model for the phase 114A based on the parameter data 182A, the phase data 154A, the updated first parameter values (determined at 519), the updated second parameter values (determined at 521), or a combination thereof.

Similarly, the model generator 164 can generate one or more additional models of the aircraft performance model 174 based on the aircraft performance model 172, one or more models of the aircraft performance model 174, or a combination thereof.

At 535, the model generator 164 determines whether stop criteria for the models of the aircraft performance model 174 are satisfied. For example, the model generator 164 determines whether a difference between predicted values of a model parameter and actual values of the model parameter satisfies the difference threshold 566 or a count of iterations is greater than the count threshold 568, as described with reference to FIG. 5B. The model generator 164, in response to determining that the stop criterion of at least one of the models is not satisfied, updates one or more of the models of the aircraft performance model 174.

In some aspects, during subsequent iterations, the model generator 164 uses the aircraft performance model 174 to determine the parameter data 182. For example, at 501 in these aspects, the model generator 164 performs the compute operation using the aircraft performance model 174 instead of the aircraft performance model 172. In some examples, a compute operation depicted without an "*" is performed using the aircraft performance model 172 in an initial iteration and using the aircraft performance model 174 in a subsequent iteration. In some examples, a compute operation depicted with an "*" is performed using one or more models of the aircraft performance model 174.

Referring to FIG. 6A, a diagram 600 of a particular implementation of the output generator 166 is shown. The output generator 166 is configured to obtain flight data 622. The flight data 622 indicates values of one or more flight variables.

In a particular aspect, the flight data 622 includes a portion of the flight data 122 that is not used by the aircraft performance model 172 to generate the parameter data 182 and that is not used by the model generator 164 to generate the aircraft performance model 174. In some implementations, the flight data 622 includes at least a portion of the flight data 122 of FIG. 1, at least a portion of the estimated flight data 260 of FIG. 2, or both.

The output generator 166 obtains input data 624 from the flight data 622. For example, the output generator 166 performs one or more operations (e.g., cleaning, filtering, selecting, etc.) described with reference to the data pre-processor 158 of FIG. 1A to generate the input data 624 from the flight data 622.

The output generator 166 applies the aircraft performance model 172 to the input data 624 to generate parameter values 626 of one or more model parameters. Additionally, the output generator 166 applies the aircraft performance model 174 to the input data 624 to generate parameter values 628 of the one or more model parameters.

The parameter values 626 and the parameter values 628 indicate first predicted values and second predicted values, respectively, of the one or more parameters. The flight data 622 also indicates actual values 630 of the one or more parameters.

The output generator 166 includes an error analyzer 672 that generates error data 642 based on a comparison of the parameter values 626 and the actual values 630. The error analyzer 672 also generates error data 642 based on a comparison of the parameter values 628 and the actual values 630.

In a particular aspect, the output generator 166 generates the output 176 based on the error data 642 and the error data 644. In some implementations, the output 176 indicates a difference (e.g., an absolute percentage error) between the error data 642 and the error data 644, as further described with reference to FIG. 6B.

In some implementations, the output generator 166, in response to determining that a difference between the aircraft performance model 172 and the aircraft performance model 174 is greater than a difference threshold, generates the output 176 indicating an alert, a request to schedule inspection prior to any planned flights of the aircraft 142, or both. For example, a greater difference can indicate larger changes in operation of the aircraft 142, errors in generating the aircraft performance model 174, or both. In an example, the difference between the aircraft performance model 172 and the aircraft performance model 174 corresponds to a difference (e.g., the absolute percentage error) between the error data 642 and the error data 644.

Referring to FIG. 6B, a diagram 650 is shown of an illustrative example of data generated by the error analyzer 672. For example, the diagram 650 indicates a difference (e.g., the absolute percentage error) between the error data 642 and the error data 644 of FIG. 6A.

In an illustrative example, the error data 642 indicates a first fuel flow difference between predicted fuel flow indicated by the parameter values 626 and actual fuel flow indicated by the actual values 630, and the error data 642 indicates a second fuel flow difference between predicted fuel flow indicated by the parameter values 628 and the actual flow indicated by the actual values 630. The diagram 650 indicates a difference (e.g., the absolute percentage error) between the first fuel flow and the second fuel flow.

In some implementations, the output 176 includes a graphical user interface (GUI) that indicates the difference (e.g., the absolute percentage error) between the error data 642 and the error data 644.

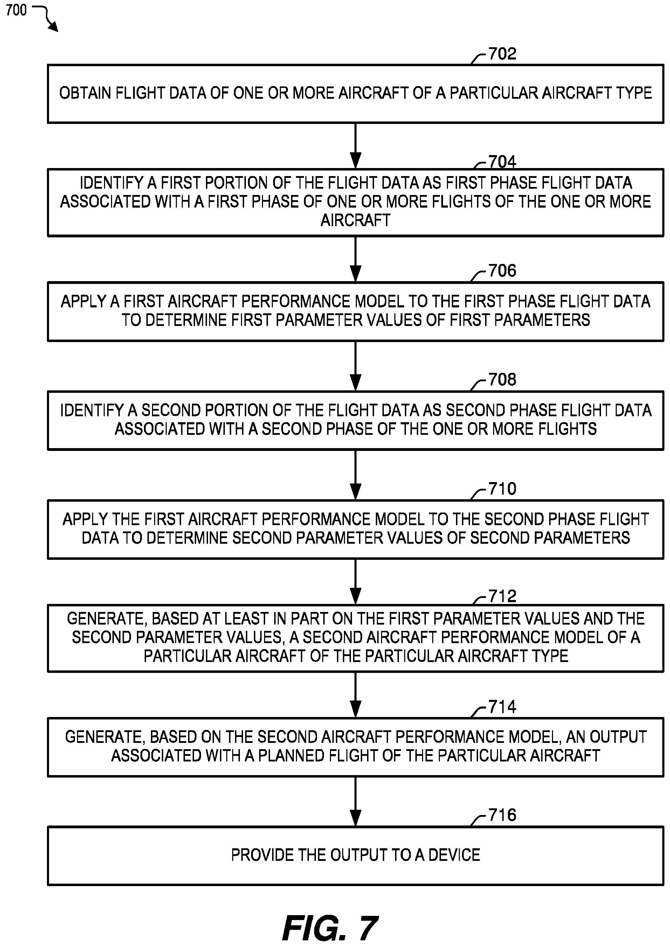

FIG. 7 is a flow chart of a method 700 of generating an aircraft performance model based on historical flight data. In a particular aspect, the method 700 is performed by the data pre-processor 158, the phase data segmentor 160, the aircraft performance model 172, the model generator 164, the output generator 166, the flight data analyzer 106, the one or more processors 104, the device 102, the system 100 of FIG. 1A, or a combination thereof.

The method 700 includes, at 702, obtaining flight data of one or more aircraft of a particular aircraft type. For example, the data pre-processor 158 obtains the flight data 122 of the one or more aircraft 124 of the aircraft type 120, as described with reference to FIG. 1A.

The method 700 also includes, at 704, identifying a first portion of the flight data as first phase flight data associated with a first phase of one or more flights of the one or more aircraft. For example, the phase data segmentor 160 identifies a portion of the flight data 122 as the phase data 154A associated with the phase 114A of one or more of the flights 112 of the one or more aircraft 124, as described with reference to FIG. 3.

The method 700 further includes, at 706, applying a first aircraft performance model to the first phase flight data to determine first parameter values of first parameters. For example, the flight data analyzer 106 applies the aircraft performance model 172 to the phase data 154A to generate the parameter data 182A. The parameter data 182A indicates the parameter values 412A of the one or more throttle (TH) model parameters 420, the parameter values 414A of the general thrust (THR) model parameters 430, additional parameter values of one or more additional model parameters, or a combination thereof, as described with reference to FIG. 4.

The method 700 also includes, at 708, identifying a second portion of the flight data as second phase flight data associated with a second phase of the one or more flights. For example, the phase data segmentor 160 identifies a portion of the flight data 122 as the phase data 154B associated with the phase 114B of one or more of the flights 112 of the one or more aircraft 124, as described with reference to FIG. 3.

The method 700 further includes, at 710, applying the first aircraft performance model to the second phase flight data to determine second parameter values of second parameters. For example, the flight data analyzer 106 applies the aircraft performance model 172 to the phase data 154B to generate the parameter data 182B. The parameter data 182B indicates the parameter values 412B of the one or more throttle (TH) model parameters 420, the parameter values 414B of the general thrust (THR) model parameters 430, additional parameter values of one or more additional model parameters, or a combination thereof, as described with reference to FIGS. 1A, 1B, and 4.

The method 700 also includes, at 712, generating, based at least in part on the first parameter values and the second parameter values, a second aircraft performance model of a particular aircraft of the particular aircraft type. For example, the model generator 164 generates, based at least in part on the parameter data 182A and the parameter data 182B, the aircraft performance model 174 of the aircraft 142 of the aircraft type 120, as described with reference to FIGS. 1A, 1B, and 5A-5C.

The method 700 further includes, at 714, generating, based on the second aircraft performance model, an output associated with a planned flight of the particular aircraft. For example, the output generator 166 generates, based at least in part on the aircraft performance model 174, the output 176 associated with a planned flight of the aircraft 142, as described with reference to FIGS. 1A, 6A, and 6B.

The method 700 also includes, at 716, providing the output to a device. For example, the output generator 166 provides the output 176 to the one or more devices 144, as described with reference to FIG. 1A.

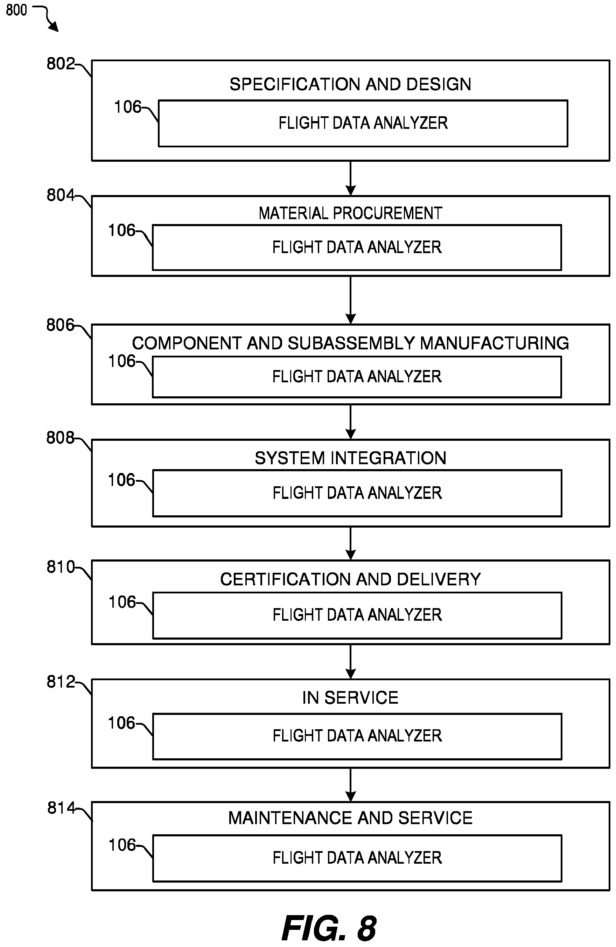

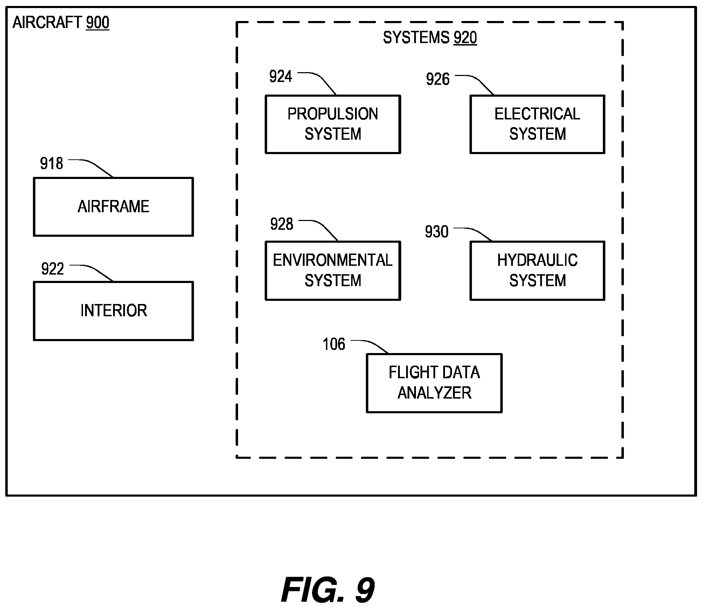

Referring to FIG. 8, a flowchart illustrative of a life cycle of an aircraft that includes the flight data analyzer 106 is shown and designated 800. During pre-production, the exemplary method 800 includes, at 802, specification and design of an aircraft, such as the aircraft 142 described with reference to FIG. 9. During specification and design of the aircraft, the method 800 may include specification and design of the flight data analyzer 106. At 804, the method 800 includes material procurement, which may include procuring materials for the flight data analyzer 106.

During production, the method 800 includes, at 806, component and subassembly manufacturing and, at 808, system integration of the aircraft. For example, the method 800 may include component and subassembly manufacturing of the flight data analyzer 106 and system integration of the flight data analyzer 106. At 810, the method 800 includes certification and delivery of the aircraft and, at 812, placing the aircraft in service. Certification and delivery may include certification of the flight data analyzer 106 to place the flight data analyzer 106 in service. While in service by a customer, the aircraft may be scheduled for routine maintenance and service (which may also include modification, reconfiguration, refurbishment, and so on). At 814, the method 800 includes performing maintenance and service on the aircraft, which may include performing maintenance and service on the flight data analyzer 106.

Each of the processes of the method 800 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

Aspects of the disclosure can be described in the context of an example of a vehicle. A particular example of a vehicle is an aircraft 900 as shown in FIG. 9.

In the example of FIG. 9, the aircraft 900 includes an airframe 918 with a plurality of systems 920 and an interior 922. Examples of the plurality of systems 920 include one or more of a propulsion system 924, an electrical system 926, an environmental system 928, a hydraulic system 930, and the flight data analyzer 106. Any number of other systems may be included. For example, in some implementations, the plurality of systems 920 include the output generator 166 of FIG. 1A that receives the aircraft performance model 174 from another device.

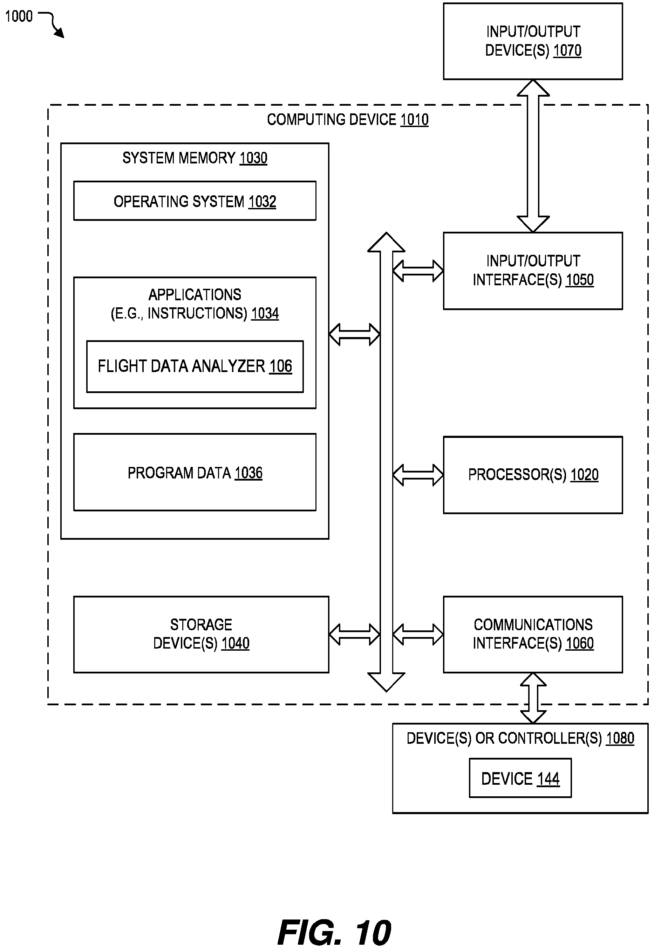

FIG. 10 is a block diagram of a computing environment 1000 including a computing device 1010 configured to support aspects of computer-implemented methods and computer-executable program instructions (or code) according to the present disclosure. For example, the computing device 1010, or portions thereof, is configured to execute instructions to initiate, perform, or control one or more operations described with reference to FIGS. 1A-7.

The computing device 1010 includes one or more processors 1020. The processor(s) 1020 are configured to communicate with system memory 1030, one or more storage devices 1040, one or more input/output interfaces 1050, one or more communications interfaces 1060, or any combination thereof. The system memory 1030 includes volatile memory devices (e.g., random access memory (RAM) devices), nonvolatile memory devices (e.g., read-only memory (ROM) devices, programmable read-only memory, and flash memory), or both. The system memory 1030 stores an operating system 1032, which may include a basic input/output system for booting the computing device 1010 as well as a full operating system to enable the computing device 1010 to interact with users, other programs, and other devices.

The system memory 1030 stores system (program) data 1036, such as the aircraft type 120, the flight data 122, the phase data 154, the parameter data 182, the aircraft performance model 172, the aircraft performance model 174, the output 176 of FIG. 1, the estimated flight data 260 of FIG. 2, the flight data 352, the flight data 322, the throttle models 472, the general thrust models 474, the parameter values 412, the one or more throttle (TH) model parameters 420, the parameter values 414, the one or more general thrust (THR) model parameters 430, the flight variables 416, the flight variables 418, the values 407, the values 409, the values 417, the values 419 of FIG. 4, the general fuel (F) models 572, the values 507, the actual values 512, the flight variables 516, the values 517, the general fuel (F) model parameters 520 of FIG. 5A, the difference threshold 566, the count threshold 568, the actual values 522 of FIG. 5B, the flight data 622, the input data 624, the parameter values 626, the parameter values 628, the actual values 630, the error data 642, the error data 644 of FIG. 6A, any data used or generated by one or more components of the flight data analyzer 106, or a combination thereof.

The system memory 1030 includes one or more applications 1034 (e.g., sets of instructions) executable by the processor(s) 1020. As an example, the one or more applications 1034 include instructions executable by the processor(s) 1020 to initiate, control, or perform one or more operations described with reference to FIGS. 1A-9. To illustrate, the one or more applications 1034 include instructions executable by the processor(s) 1020 to initiate, control, or perform one or more operations described with reference to the flight data analyzer 106.

In a particular implementation, the system memory 1030 includes a non-transitory, computer readable medium storing the instructions that, when executed by the processor(s) 1020, cause the processor(s) 1020 to initiate, perform, or control operations to generate an aircraft performance model based on historical flight data. The operations include obtaining flight data (e.g., the flight data 122 of FIG. 1A) of one or more aircraft (e.g., the one or more aircraft 124 of FIG. 1A) of a particular aircraft type (e.g., the aircraft type 120 of FIG. 1A). The operations also include identifying a first portion of the flight data (e.g., the flight data 122) as first phase flight data (e.g., the phase data 154A) associated with a first phase (e.g., the phase 114A of FIG. 1A) of one or more flights (e.g., the flights 112 of FIG. 1A) of the one or more aircraft. The operations further include applying a first aircraft performance model (e.g., the aircraft performance model 172 of FIG. 1A) to the first phase flight data to determine first parameter values of first parameters (e.g., the parameter values 412A of the one or more throttle (TH) model parameters 420, the parameter values 414A of the one or more general thrust (THR) model parameters 430 of FIG. 4, or both). The operations also include identifying a second portion of the flight data as second phase flight data (e.g., the phase data 154B) associated with a second phase (e.g., the phase 114B) of the one or more flights. The operations further include applying the first aircraft performance model to the second phase flight data to determine second parameter values of second parameters (e.g., the parameter values 412B of the one or more throttle (TH) model parameters 420, the parameter values 414B of the one or more general thrust (THR) model parameters 430 of FIG. 4, or both). The operations also include generating, based at least in part on the first parameter values and the second parameter values, a second aircraft performance model (e.g., the aircraft performance model 174) of a particular aircraft (e.g., the aircraft 142 of FIG. 1A) of the particular aircraft type. The operations further include generating, based on the second aircraft performance model, an output (e.g., the output 176 of FIG. 1A) associated with a planned flight of the particular aircraft. The operations also include providing the output to a device (e.g., the one or more devices 144 of FIG. 1A).

The one or more storage devices 1040 include nonvolatile storage devices, such as magnetic disks, optical disks, or flash memory devices. In a particular example, the storage devices 1040 include both removable and non-removable memory devices. The storage devices 1040 are configured to store an operating system, images of operating systems, applications (e.g., one or more of the applications 1034), and program data (e.g., the program data 1036). In a particular aspect, the system memory 1030, the storage devices 1040, or both, include tangible computer-readable media. In a particular aspect, one or more of the storage devices 1040 are external to the computing device 1010.

The one or more input/output interfaces 1050 enable the computing device 1010 to communicate with one or more input/output devices 1070 to facilitate user interaction. For example, the one or more input/output interfaces 1050 can include a display interface, an input interface, or both. For example, the input/output interface 1050 is adapted to receive input from a user, to receive input from another computing device, or a combination thereof. In some implementations, the input/output interface 1050 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the one or more input/output devices 1070 include one or more user interface devices and displays, including some combination of buttons, keyboards, pointing devices, displays, speakers, microphones, touch screens, and other devices.

The processor(s) 1020 are configured to communicate with devices or controllers 1080 via the one or more communications interfaces 1060. For example, the one or more communications interfaces 1060 can include a network interface. The devices or controllers 1080 can include, for example, the storage device 140, the aircraft 142, the one or more devices 144, one or more other devices, or any combination thereof.

In conjunction with the described systems and methods, an apparatus for generating an aircraft performance model based on historical flight data is disclosed that includes means for obtaining flight data of one or more aircraft of a particular aircraft type. In some implementations, the means for obtaining the flight data corresponds to the data pre-processor 158, the flight data analyzer 106, the one or more processors 104, the device 102, the system 100 of FIG. 1A, one or more other circuits or devices configured to obtain the flight data, or a combination thereof.

The apparatus also includes means for identifying a first portion of the flight data as first phase flight data associated with a first phase of one or more flights of the one or more aircraft. In some implementations, the means for identifying corresponds to the phase data segmentor 160, the flight data analyzer 106, the one or more processors 104, the device 102, the system 100 of FIG. 1A, one or more other devices configured to identify the first portion as the first phase flight data, or a combination thereof.

The apparatus further includes means for applying a first aircraft performance model to the first phase flight data to determine first parameter values of first parameters. In some implementations, the means for applying the first aircraft performance model corresponds to the flight data analyzer 106, the one or more processors 104, the device 102, the system 100 of FIG. 1A, one or more other devices configured to apply a first aircraft performance model, or a combination thereof.

The apparatus also includes means for identifying a second portion of the flight data as second phase flight data associated with a second phase of the one or more flights. In some implementations, the means for identifying corresponds to the phase data segmentor 160, the flight data analyzer 106, the one or more processors 104, the device 102, the system 100 of FIG. 1A, one or more other devices configured to identify the second portion as the second phase flight data, or a combination thereof.

The apparatus further includes means for applying the first aircraft performance model to the second phase flight data to determine second parameter values of second parameters. In some implementations, the means for applying the first aircraft performance model corresponds to the flight data analyzer 106, the one or more processors 104, the device 102, the system 100 of FIG. 1A, one or more other devices configured to apply the first aircraft performance model, or a combination thereof.

The apparatus also includes means for generating, based at least in part on the first parameter values and the second parameter values, a second aircraft performance model of a particular aircraft of the particular aircraft type. In some implementations, the means for generating the second aircraft performance model corresponds to the model generator 164, the flight data analyzer 106, the one or more processors 104, the device 102, the system 100 of FIG. 1A, one or more other devices configured to generate the second performance model, or a combination thereof.

The apparatus further includes means for generating, based on the second aircraft performance model, an output associated with a planned flight of the particular aircraft. In some implementations, the means for generating the output corresponds to the output generator 166, the flight data analyzer 106, the one or more processors 104, the device 102, the system 100 of FIG. 1A, one or more other devices configured to generate the output, or a combination thereof.

The apparatus also includes means for providing the output to a device. In some implementations, the means for providing the output corresponds to the output generator 166, the flight data analyzer 106, the one or more processors 104, the device 102, the system 100 of FIG. 1A, one or more other devices configured to provide the output to a device, or a combination thereof.

In some implementations, a non-transitory, computer readable medium stores instructions that, when executed by one or more processors, cause the one or more processors to initiate, perform, or control operations to perform part or all of the functionality described above. For example, the instructions may be executable to implement one or more of the operations or methods of FIGS. 1A-7. In some implementations, part or all of one or more of the operations or methods of FIGS. 1A-7 may be implemented by one or more processors (e.g., one or more central processing units (CPUs), one or more graphics processing units (GPUs), one or more digital signal processors (DSPs)) executing instructions, by dedicated hardware circuitry, or any combination thereof.

The device of the disclosure includes: a memory configured to store a first aircraft performance model; one or more processors configured to: obtain flight data of one or more aircraft of a particular aircraft type; identify a first portion of the flight data as first phase flight data associated with a first phase of one or more flights of the one or more aircraft; apply the first aircraft performance model to the first phase flight data to determine first parameter values of first parameters; identify a second portion of the flight data as second phase flight data associated with a second phase of the one or more flights; apply the first aircraft performance model to the second phase flight data to determine second parameter values of second parameters; generate, based at least in part on the first parameter values and the second parameter values, a second aircraft performance model of a particular aircraft of the particular aircraft type; generate, based on the second aircraft performance model, an output associated with a planned flight of the particular aircraft; and provide the output to a second device.

In examples the one or more aircraft include the particular aircraft.

In examples the first phase includes one of a taxi out phase, a takeoff phase, a climb phase, a cruise phase, a descent phase, an approach phase, a go around phase, or a taxi in phase, and wherein the second phase includes another one of the taxi out phase, the takeoff phase, the climb phase, the cruise phase, the descent phase, the approach phase, the go around phase, or the taxi in phase.

In examples the first aircraft performance model corresponds to a baseline model associated with the particular aircraft type.

In examples the first aircraft performance model corresponds to a previously generated aircraft performance model of the particular aircraft.

In examples the one or more processors are configured to, based on determining that a difference between the first aircraft performance model and the second aircraft performance model is greater than a threshold, schedule inspection of the particular aircraft to occur prior to the planned flight.

In examples the second device includes a user device, a ground control device, an electronic flight bag, an airline server, a display device in the particular aircraft, or a combination thereof.

In examples the one or more processors are configured to generate, based on the second aircraft performance model, the output indicating flight planning data for the planned flight.

In examples the flight planning data includes a fuel consumption estimate.

In examples wherein the one or more processors are configured to: identify portions of a flight envelope of the particular aircraft type that are not represented in the flight data; and generate, based on the first aircraft performance model, estimated flight data corresponding to the identified portions of the flight envelope, wherein the second aircraft performance model is based at least in part on the estimated flight data.

In examples the one or more processors are configured to: generate first estimated flight data corresponding to limits of the flight envelope; and generate second estimated flight data that is distributed in the identified portions, wherein the estimated flight data includes the first estimated flight data and the second estimated flight data.

In examples the one or more processors are configured to use the first aircraft performance model to process input values of input variables to generate one or more parameter values of one or more parameters, wherein the input variables include altitude, flight path angle, air temperature, Mach number, aircraft mass, fuel flow, or a combination thereof, and wherein the one or more parameters include a throttle position, thrust, drag, fuel flow rate, or a combination thereof.

In examples the one or more processors are further configured to perform, based at least in part on the first parameter values and the second parameter values, regression to generate the second aircraft performance model.

In examples the first aircraft performance model corresponds to first polynomial equations having first coefficients, and wherein the one or more processors are configured to: perform, based at least in part on the first parameter values and the second parameter values, linear regression to determine second coefficients; and generate the second aircraft performance model corresponding to second polynomial equations having the second coefficients.

The method of the disclosure includes: obtaining, at a first device, flight data of one or more aircraft of a particular aircraft type; identifying, at the first device, a first portion of the flight data as first phase flight data associated with a first phase of one or more flights of the one or more aircraft; applying, at the first device, a first aircraft performance model to the first phase flight data to determine first parameter values of first parameters; identifying, at the first device, a second portion of the flight data as second phase flight data associated with a second phase of the one or more flights; applying, at the first device, the first aircraft performance model to the second phase flight data to determine second parameter values of second parameters; generating, based at least in part on the first parameter values and the second parameter values, a second aircraft performance model of a particular aircraft of the particular aircraft type; generating, based on the second aircraft performance model, an output associated with a planned flight of the particular aircraft; and providing the output from the first device to a second device.

In examples the one or more aircraft include the particular aircraft.

In examples the first phase includes one of a taxi out phase, a takeoff phase, a climb phase, a cruise phase, a descent phase, an approach phase, a go around phase, or a taxi in phase, and wherein the second phase includes another one of the taxi out phase, the takeoff phase, the climb phase, the cruise phase, the descent phase, the approach phase, the go around phase, or the taxi in phase.

In examples the first aircraft performance model corresponds to a baseline model associated with the particular aircraft type.

In examples the first aircraft performance model corresponds to a previously generated aircraft performance model of the particular aircraft.

In examples the method further includes, based on determining that a difference between the first aircraft performance model and the second aircraft performance model is greater than a threshold, scheduling inspection of the particular aircraft to occur prior to the planned flight.

In examples the second device includes a user device, a ground control device, an electronic flight bag, an airline server, a display device in the particular aircraft, or a combination thereof.

In examples method further includes generating, based on the second aircraft performance model, the output indicating flight planning data for the planned flight.

In examples the flight planning data includes a fuel consumption estimate.

In examples the method further includes identifying portions of a flight envelope of the particular aircraft type that are not represented in the flight data; and generating, based on the first aircraft performance model, estimated flight data corresponding to the identified portions of the flight envelope, wherein the second aircraft performance model is based at least in part on the estimated flight data.

In examples the method further includes generating first estimated flight data corresponding to limits of the flight envelope; and generating second estimated flight data that is distributed in the identified portions, wherein the estimated flight data includes the first estimated flight data and the second estimated flight data.

In examples the method further includes using the first aircraft performance model to process input values of input variables to generate one or more parameter values of one or more parameters, wherein the input variables include altitude, flight path angle, air temperature, Mach number, aircraft mass, fuel flow, or a combination thereof, and wherein the one or more parameters include a throttle position, thrust, drag, fuel flow rate, or a combination thereof.

In examples the method further includes performing, based at least in part on the first parameter values and the second parameter values, regression to generate the second aircraft performance model.

In examples the method further includes performing, based at least in part on the first parameter values and the second parameter values, linear regression to determine second coefficients; and generating the second aircraft performance model corresponding to second polynomial equations having the second coefficients, wherein the first aircraft performance model corresponds to first polynomial equations having first coefficients.

The non-transitory computer-readable medium of the disclosure stores instructions that, when executed by a processor, cause the processor to perform the method of the disclosure.

An apparatus of the disclosure includes means for carrying out the method of the disclosure.

The non-transitory computer-readable medium stores instructions that, when executed by one or more processors, cause the one or more processors to: obtain flight data of one or more aircraft of a particular aircraft type; identify a first portion of the flight data as first phase flight data associated with a first phase of one or more flights of the one or more aircraft; apply a first aircraft performance model to the first phase flight data to determine first parameter values of first parameters; identify a second portion of the flight data as second phase flight data associated with a second phase of the one or more flights; apply the first aircraft performance model to the second phase flight data to determine second parameter values of second parameters; generate, based at least in part on the first parameter values and the second parameter values, a second aircraft performance model of a particular aircraft of the particular aircraft type; generate, based on the second aircraft performance model, an output associated with a planned flight of the particular aircraft; and provide the output to a device.

In examples the one or more aircraft include the particular aircraft.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims.

**Claims**

**1.** A device (102) comprising:

a memory (108) configured to store a first aircraft performance model;
one or more processors (104) coupled to the memory and configured to:

obtain flight data (122) of one or more aircraft (124) of a particular aircraft type;
identify a first portion of the flight data as first phase flight data (154A) associated with a first phase (114A) of one or more flights of the one or more aircraft;
apply the first aircraft performance model (172) to the first phase flight data to determine first parameter values of first parameters;
identify a second portion (154B) of the flight data as second phase flight (114B) data associated with a second phase of the one or more flights;
apply the first aircraft performance model to the second phase flight data to determine second parameter values of second parameters;
generate, based at least in part on the first parameter values and the second parameter values, a second aircraft performance model of a particular aircraft of the particular aircraft type;
generate, based on the second aircraft performance model, an output associated with a planned flight of the particular aircraft; and
provide the output to a second device.

2. The device (102) of claim 1, wherein the one or more aircraft (124) include the particular aircraft.

3. The device (102) of any of claims 1 or 2, wherein the first phase (154A) includes one of a taxi out phase, a takeoff phase, a climb phase, a cruise phase, a descent phase, an approach phase, a go around phase, or a taxi in phase, and wherein the second phase includes another one of the taxi out phase, the takeoff phase, the climb phase, the cruise phase, the descent phase, the approach phase, the go around phase, or the taxi in phase.

4. The device (102) of any one of claims 1 to 3, wherein the first aircraft performance model (172) corresponds to a baseline model associated with the particular aircraft type.

5. The device (102) of any one of claims 1 to 4, wherein the first aircraft performance model (172) corresponds to a previously generated aircraft performance model of the particular aircraft.

6. The device (102) of any one of claims 1 to 5, wherein the one or more processors (104) are configured to, based on determining that a difference between the first aircraft performance model (172) and the second aircraft performance model is greater than a threshold, schedule inspection of the particular aircraft to occur prior to the planned flight.

7. The device (102) of any one of claims 1 to 6, wherein the second device includes a user device, a ground control device, an electronic flight bag, an airline server, a display device in the particular aircraft, or a combination thereof.

8. The device (102) of any one of claims 1 to 7, wherein the one or more processors (104) are configured to generate, based on the second aircraft performance model, the output indicating flight planning data for the planned flight.

9. The device (102) of claim 8, wherein the flight planning data includes a fuel consumption estimate.

10. The device (102) any one of claims 1 to 9, wherein the one or more processors (104) are configured to:

    identify portions of a flight envelope of the particular aircraft type that are not represented in the flight data (122); and
    generate, based on the first aircraft performance model (172), estimated flight data corresponding to the identified portions of the flight envelope,
    wherein the second aircraft performance model is based at least in part on the estimated flight data.

11. The device (102) of claim 10, wherein the one or more processors (104) are configured to:

    generate first estimated flight data corresponding to limits of the flight envelope; and
    generate second estimated flight data that is distributed in the identified portions, wherein the estimated flight data includes the first estimated flight data and the second estimated flight data.

12. The device (102) of any one of claims 1 to 11, wherein the one or more processors (104) are configured to use the first aircraft performance model (172) to process input values of input variables to generate one or more parameter values of one or more parameters, wherein the input variables include altitude, flight path angle, air temperature, Mach number, aircraft mass, fuel flow, or a combination thereof, and wherein the one or more parameters include a throttle position, thrust, drag, fuel flow rate, or a combination thereof.

13. A method comprising:

    obtaining, at a first device (102), flight data (122) of one or more aircraft (124) of a particular aircraft type;
    identifying, at the first device, a first portion (154A) of the flight data as first phase flight data (114A) associated with a first phase of one or more flights of the one or more aircraft;

applying, at the first device, a first aircraft performance model (172) to the first phase flight data to determine first parameter values of first parameters;

identifying, at the first device, a second portion (154B) of the flight data as second phase flight data (114B) associated with a second phase of the one or more flights;

applying, at the first device, the first aircraft performance model to the second phase flight data to determine second parameter values of second parameters;

generating, based at least in part on the first parameter values and the second parameter values, a second aircraft performance model of a particular aircraft of the particular aircraft type;

generating, based on the second aircraft performance model, an output associated with a planned flight of the particular aircraft; and

providing the output from the first device to a second device.

14. The method of claim 13, wherein the one or more aircraft (124) include the particular aircraft.

15. A non-transitory computer-readable medium storing instructions that, when executed by one or more processors (104), cause the one or more processors to carry out the steps of the method of any one of claims 13 or 14.

**Patentansprüche**

1. Eine Vorrichtung (102), umfassend:

   einen Speicher (108), der dazu konfiguriert ist, ein erstes Flugzeugleistungsmodell zu speichern;
   einen oder mehrere Prozessoren (104), die an den Speicher gekoppelt und dazu konfiguriert sind:

   Flugdaten (122) eines oder mehrerer Flugzeuge (124) eines bestimmten Flugzeugtyps zu erhalten;
   einen ersten Teil der Flugdaten als Flugdaten der ersten Phase (154A), welche einer ersten Phase (114A) eines oder mehrerer Flüge des einen oder der mehreren Flugzeuge zugeordnet sind, zu identifizieren;
   anwenden des ersten Flugzeugleistungsmodells (172) auf die Flugdaten der ersten Phase, um erste Parameterwerte von ersten Parametern zu bestimmen;
   identifizieren eines zweiten Teils (154B) der Flugdaten als Flugdaten der zweiten Phase (114B), die einer zweiten Phase des einen oder der mehreren Flüge zugeordnet sind;
   das erste Flugzeugleistungsmodell auf die Flugdaten der zweiten Phase anzuwenden, um zweite Parameterwerte von zweiten Parametern zu bestimmen;
   zumindest teilweise auf Grundlage der ersten Parameterwerte und der zweiten Parameterwerte, ein zweites Flugzeugleistungsmodell eines bestimmten Flugzeugs des bestimmten Flugzeugtyps zu erzeugen;
   auf Grundlage des zweiten Flugzeugleistungsmodells, eine Ausgabe zu erzeugen, die einem geplanten Flug des bestimmten Flugzeugs zugeordnet ist; und
   die Ausgabe an eine zweite Vorrichtung bereitzustellen.

2. Die Vorrichtung (102) von Anspruch 1, wobei das eine oder die mehreren Flugzeuge (124) das bestimmte Flugzeug beinhalten.

3. Die Vorrichtung (102) von einem der Ansprüche 1 oder 2, wobei die erste Phase (154A) eine von einer Phase des ausgehenden Rollens, einer Startphase, einer Steigflugphase, einer Reiseflugphase, einer Sinkphase, einer Anflugphase, einer Durchstartphase oder einer Phase des eingehenden Rollens beinhaltet, und wobei die zweite Phase eine andere von der Phase des ausgehenden Rollens, der Startphase, der Steigflugphase, der Reiseflugphase, der Sinkphase, der Anflugphase, der Durchstartphase oder der Phase des eingehenden Rollens beinhaltet.

4. Die Vorrichtung (102) von einem der Ansprüche 1 bis 3, wobei das erste Flugzeugleistungsmodell (172) einem Basislinienmodell entspricht, das dem bestimmten Flugzeugtyp zugeordnet ist.

5. Die Vorrichtung (102) von einem der Ansprüche 1 bis 4, wobei das erste Flugzeugleistungsmodell (172) einem zuvor erzeugten Flugzeugleistungsmodell des bestimmten Flugzeugs entspricht.

6. Die Vorrichtung (102) von einem der Ansprüche 1 bis 5, wobei der eine oder die mehreren Prozessoren (104) dazu konfiguriert sind, auf Grundlage von dem Bestimmen, dass eine Differenz zwischen dem ersten Flugzeugleistungsmodell (172) und dem zweiten Flugzeugleistungsmodell größer als ein Schwellenwert ist, eine vor dem geplanten Flug stattzufindende Inspektion des bestimmten Flugzeugs festzulegen.

7. Die Vorrichtung (102) von einem der Ansprüche 1 bis 6, wobei die zweite Vorrichtung eine Benutzervorrichtung, eine Rollkontrollevorrichtung, ein EFB (englisch: *electronic flight bag),* einen Airline-Server, eine Anzeigevorrichtung in dem bestimmten Flugzeug oder eine Kombination davon beinhaltet.

8. Die Vorrichtung (102) von einem der Ansprüche 1 bis 7, wobei der eine oder die mehreren Prozessoren (104) dazu konfiguriert sind, auf der Grundlage des zweiten Flugzeugleistungsmodells die Ausgabe zu erzeugen, die Flugplanungsdaten für den geplanten Flug angibt.

9. Die Vorrichtung (102) von Anspruch 8, wobei die Flugplanungsdaten eine Kraftstoffverbrauchsschätzung beinhalten.

10. Die Vorrichtung (102) von einem der Ansprüche 1 bis 9, wobei der eine oder die mehreren Prozessoren (104) dazu konfiguriert sind:

   Abschnitte einer Flugenveloppe des bestimmten Flugzeugtyps, die in den Flugdaten (122) nicht dargestellt sind, zu identifizieren; und
   auf Grundlage des ersten Flugzeugleistungsmodells (172), geschätzte Flugdaten zu erzeugen, die den identifizierten Abschnitten der Flugenveloppe entsprechen,
   wobei das zweite Flugzeugleistungsmodell zumindest teilweise auf den geschätzten Flugdaten basiert.

11. Die Vorrichtung (102) von Anspruch 10, wobei der eine oder die mehreren Prozessoren (104) dazu konfiguriert sind:

   erste geschätzte Flugdaten, die den Grenzen der Flugenveloppe entsprechen, zu erzeugen; und
   zweite geschätzte Flugdaten, die in den identifizierten Abschnitten verteilt sind, zu erzeugen, wobei die geschätzten Flugdaten die ersten geschätzten Flugdaten und die zweiten geschätzten Flugdaten beinhalten.

12. Die Vorrichtung (102) von einem der Ansprüche 1 bis 11, wobei der eine oder die mehreren Prozessoren (104) dazu konfiguriert sind, das erste Flugzeugleistungsmodell (172) zu verwenden, um Eingangswerte von Eingangsvariablen zu verarbeiten, um einen oder mehrere Parameterwerte von einem oder mehreren Parametern zu erzeugen, wobei die Eingangsvariablen Höhe, Flugbahnwinkel, Lufttemperatur, Mach-Zahl, Flugzeugmasse, Kraftstofffluss oder eine Kombination davon beinhalten, und wobei der eine oder die mehreren Parameter eine Schubhebelposition, Schub, Luftwiderstand, Kraftstoffflussrate oder eine Kombination davon beinhalten.

13. Ein Verfahren, umfassend:

   erhalten von Flugdaten (122) eines oder mehrerer Flugzeuge (124) eines bestimmten Flugzeugtyps an einer ersten Vorrichtung (102);
   identifizieren, an der ersten Vorrichtung, eines ersten Teils (154A) der Flugdaten als Flugdaten der ersten Phase (114A), die einer ersten Phase von einem oder mehreren Flügen des einen oder der mehreren Flugzeuge zugeordnet sind;
   anwenden eines ersten Flugzeugleistungsmodells (172) auf die Flugdaten der ersten Phase an der ersten Vorrichtung, um erste Parameterwerte von ersten Parametern zu bestimmen;
   identifizieren eines zweiten Teils (154B) der Flugdaten als Flugdaten der zweiten Phase (114B), die einer zweiten Phase des einen oder der mehreren Flüge zugeordnet sind, an der ersten Vorrichtung;
   anwenden des ersten Flugzeugleistungsmodells auf die Flugdaten der zweiten Phase an der ersten Vorrichtung, um zweite Parameterwerte von zweiten Parametern zu bestimmen;
   erzeugen, zumindest teilweise auf Grundlage der ersten Parameterwerte und der zweiten Parameterwerte, eines zweiten Flugzeugleistungsmodells eines bestimmten Flugzeugs des bestimmten Flugzeugtyps;
   erzeugen von einer Ausgabe, die einem geplanten Flug des bestimmten Flugzeugs zugeordnet ist, auf Grundlage des zweiten Flugzeugleistungsmodells; und
   bereitstellen der Ausgabe von der ersten Vorrichtung an eine zweite Vorrichtung.

14. Das Verfahren von Anspruch 13, wobei das eine oder die mehreren Flugzeuge (124) das bestimmte Flugzeug beinhalten.

15. Ein nichtflüchtiges computerlesbares Medium, das Anweisungen speichert, die, wenn sie von einem oder mehreren Prozessoren (104) ausgeführt werden, den einen oder die mehreren Prozessoren veranlassen, die Schritte des Verfahrens von einem der Ansprüche 13 oder 14 auszuführen.

**Revendications**

1. Un dispositif (102) comprenant :

   une mémoire (108) configurée pour stocker un premier modèle de performance d'aéronef ;
   un ou plusieurs processeurs (104) couplés à la mémoire et configurés pour :

   obtenir des données de vol (122) d'un ou de plusieurs aéronefs (124) d'un type d'aéronef particulier ;
   identifier une première partie des données de vol en tant que données de vol de première phase (154A) associées à une première phase (114A) d'un ou de plusieurs vols de l'un ou des plusieurs aéronefs ;
   appliquer le premier modèle de performance d'aéronef (172) aux données de vol de première phase pour déterminer des premières valeurs de paramètres des premiers paramètres ;
   identifier une seconde partie (154B) des données de vol en tant que données de vol de seconde phase (114B) associées à une seconde phase de l'un ou des plusieurs vols ;
   appliquer le premier modèle de performance d'aéronef aux données de vol de seconde phase pour déterminer des secondes valeurs de paramètres des seconds paramètres ;
   générer, sur la base au moins en partie des premières valeurs de paramètres et des secondes valeurs de paramètres, un second modèle de performance d'aéronef d'un aéronef particulier du type d'aéronef particulier ;
   générer, sur la base du second modèle de performance d'aéronef, une sortie associée à un vol planifié de l'aéronef particulier ; et
   fournir la sortie à un second dispositif.

2. Le dispositif (102) de la revendication 1, dans lequel l'un ou les plusieurs aéronefs (124) comprennent l'aéronef particulier.

3. Le dispositif (102) de l'une quelconque des revendications 1 ou 2, dans lequel la première phase (154A) comprend l'une parmi une phase de roulage de sortie, une phase de décollage, une phase d'ascension, une phase de croisière, une phase de descente, une phase d'approche, une phase de remise de gaz ou une phase de roulage d'entrée, et dans lequel la seconde phase comprend une autre parmi la phase de roulage de sortie, la phase de décollage, la phase d'ascension, la phase de croisière, la phase de descente, la phase d'approche, la phase de de remise de gaz ou la phase de roulage d'entrée.

4. Le dispositif (102) de l'une quelconque des revendications 1 à 3, dans lequel le premier modèle de performance d'aéronef (172) correspond à un modèle de base associé au type d'aéronef particulier.

5. Le dispositif (102) de l'une quelconque des revendications 1 à 4, dans lequel le premier modèle de performance d'aéronef (172) correspond à un modèle de performance d'aéronef généré précédemment de l'aéronef particulier.

6. Le dispositif (102) de l'une quelconque des revendications 1 à 5, dans lequel le un ou les plusieurs processeurs (104) sont configurés pour, sur la base de la détermination qu'une différence entre le premier modèle de performance d'aéronef (172) et le second modèle de performance d'aéronef est supérieure à un seuil, programmer une inspection de l'aéronef particulier pour qu'elle ait lieu avant le vol prévu.

7. Le dispositif (102) de l'une quelconque des revendications 1 à 6, dans lequel le second dispositif comprend un dispositif utilisateur, un dispositif de contrôle d'approche, un EFB (anglais : *electronic flight bag* - « sacoche de vol électronique »), un serveur de compagnie aérienne, un dispositif d'affichage dans l'avion particulier, ou une combinaison de ceux-ci.

8. Le dispositif (102) de l'une quelconque des revendications 1 à 7, dans lequel le un ou les plusieurs processeurs (104) sont configurés pour générer, sur la base du second modèle de performance d'aéronef, la sortie indiquant des données de planification de vol pour le vol prévu.

9. Le dispositif (102) de la revendication 8, dans lequel les données de planification de vol comprennent une estimation de la consommation de carburant.

**10.** Le dispositif (102) de l'une quelconque des revendications 1 à 9, dans lequel le un ou les plusieurs processeurs (104) sont configurés pour :

identifier des parties d'une enveloppe de vol du type d'aéronef particulier qui ne sont pas représentées dans les données de vol (122) ; et
générer, sur la base du premier modèle de performance d'aéronef (172), des données de vol estimées correspondant aux parties identifiées de l'enveloppe de vol,
dans lequel le second modèle de performance d'aéronef est basé au moins en partie sur les données de vol estimées.

**11.** Le dispositif (102) de la revendication 10, dans lequel le un ou les plusieurs processeurs (104) sont configurés pour :

générer des premières données de vol estimées correspondant aux limites de l'enveloppe de vol ; et
générer des secondes données de vol estimées qui sont distribuées dans les parties identifiés, dans lequel les données de vol estimées comprennent les premières données de vol estimées et les secondes données de vol estimées.

**12.** Le dispositif (102) de l'une quelconque des revendications 1 à 11, dans lequel le un ou les plusieurs processeurs (104) sont configurés pour utiliser le premier modèle de performance de l'aéronef (172) pour traiter des valeurs d'entrée de variables d'entrée pour générer une ou plusieurs valeurs de paramètre d'un ou de plusieurs paramètres, dans lequel les variables d'entrée comprennent l'altitude, l'angle de trajectoire de vol, la température de l'air, le nombre de Mach, la masse de l'aéronef, le flux de carburant, ou une combinaison de ceux-ci, et dans lequel le un ou les plusieurs paramètres comprennent une position de leviers de poussée, la poussée, la traînée, le débit de carburant, ou une combinaison de ceux-ci.

**13.** Un procédé comprenant:

obtenir, au niveau d'un premier dispositif (102), des données de vol (122) d'un ou de plusieurs aéronefs (124) d'un type d'aéronef particulier ;
identifier, au niveau du premier dispositif, une première partie (154A) des données de vol en tant que données de vol de première phase (114A) associées à une première phase d'un ou de plusieurs vols de l'un ou de plusieurs aéronefs ;
appliquer, au niveau du premier dispositif, un premier modèle de performance d'aéronef (172) aux données de vol de première phase pour déterminer des premières valeurs de paramètre de premiers paramètres ;
identifier, au niveau du premier dispositif, une seconde partie (154B) des données de vol en tant que données de vol de seconde phase (114B) associées à une seconde phase de l'un ou des plusieurs vols ;
appliquer, au niveau du premier dispositif, le premier modèle de performance d'aéronef aux données de vol de seconde phase pour déterminer des secondes valeurs de paramètre de seconds paramètres ;
générer, sur la base au moins en partie des premières valeurs de paramètres et des secondes valeurs de paramètres, un second modèle de performance d'aéronef d'un aéronef particulier du type d'aéronef particulier ;
générer, sur la base du second modèle de performance d'aéronef, une sortie associée à un vol planifié de l'aéronef particulier ; et
fournir la sortie du premier dispositif à un second dispositif.

**14.** Le procédé de la revendication 13, dans lequel le un ou les plusieurs aéronefs (124) comprennent l'aéronef particulier.

**15.** Un support non transitoire lisible par ordinateur stockant des instructions qui, lorsqu'elles sont exécutées par un ou plusieurs processeurs (104), amènent le un ou les plusieurs processeurs à effectuer les étapes du procédé de l'une quelconque des revendications 13 ou 14.

**FIG. 1A**

EP 4 343 609 B1

| DATA INGESTION **190** | DATA PREPARATION **192** | TAILORING PROCESS **194** | MODEL EVALUATION **196** |
|---|---|---|---|

→ APM 174

**DATA INGESTION 190**

FLIGHT DATA LOADING

ESTIMATED FLIGHT DATA GENERATION

**DATA PREPARATION 192**

CLEANING

FILTERING

FULFILLMENT OF OPERATIONAL LIMITATIONS

DATA AUGMENTATION

PHASE DATA GENERATION

**TAILORING PROCESS 194**

FIT GENERAL FUEL MODEL

FIT FLAT- AND TEMP-RATED AREA THROTTLE MODELS

FIT GENERAL THRUST MODEL

FIT CLEAN CONFIGURATION DRAG MODEL

FIT IDLE THRUST MODEL

FIT IDLE FUEL MODEL

**MODEL EVALUATION 196**

WITH FLIGHT DATA

WITH ESTIMATED FLIGHT DATA

*FIG. 1B*

EP 4 343 609 B1

FIG. 2

FIG. 3

400

PD 154A OF
PHASE 114A

FD 322AA
FD 322BA
FD 322CA
FD 322DA
...

PD 154B OF
PHASE 114B

FD 322AB
FD 322BB
FD 322CB
FD 322DB
...

FLIGHT DATA
ANALYZER 106

AIRCRAFT PERFORMANCE MODEL (APM) 172

THROTTLE (TH) MODELS 472

TH MODEL 472A

TH COEFFICIENT
VALUES (CV) 402A

INPUT VARIABLES
(IV) 406

TH MODEL 472B

TH CV 402B

IV 406

GENERAL THRUST (THR) MODELS 474

THR MODEL 474A

THR CV 404A

IV 408

THR MODEL 474B

THR CV 404B

IV 408

...

PARAMETER VALUE(S) 412A
OF TH PARAMETER(S) 420

PARAMETER VALUE(S) 414A
OF THR PARAMETER(S) 430

PMD 182A    ...

PARAMETER VALUE(S) 412B
OF TH PARAMETER(S) 420

PARAMETER VALUE(S) 414B
OF THR PARAMETER(S) 430

PMD 182B    ...

FD 322AA

FLIGHT VARIABLES (FV) 416 → VALUES 407

FV 418 → VALUES 409

FD 322AB

FV 416 → VALUES 417

FV 418 → VALUES 419

*FIG. 4*

FIG. 5A

530 ⤵

MODEL GENERATOR 164
- PARAMETER VALUE(S) 514A OF F PARAMETER(S) 520
- PARAMETER VALUE(S) 514B OF F PARAMETER(S) 520
- DIFFERENCE THRESHOLD 566
- COUNT THRESHOLD 568

PHASE DATA 154 →

APM 174
GENERAL FUEL (F) MODELS 572
- F MODEL 572A
  - F CV 502A
  - IV 506
- F MODEL 572B
  - F CV 502B
  - IV 506

• • •

FD 322BA
- FV 516 → VALUES 527
- ACTUAL VALUE(S) 522A OF F PARAMETER(S) 520

FD 322BB
- FV 516 → VALUES 537
- ACTUAL VALUE(S) 522B OF F PARAMETER(S) 520

*FIG. 5B*

EP 4 343 609 B1

**FIG. 5C**

**FIG. 6A**

*FIG. 6B*

700

702

OBTAIN FLIGHT DATA OF ONE OR MORE AIRCRAFT OF A PARTICULAR AIRCRAFT TYPE

704

IDENTIFY A FIRST PORTION OF THE FLIGHT DATA AS FIRST PHASE FLIGHT DATA ASSOCIATED WITH A FIRST PHASE OF ONE OR MORE FLIGHTS OF THE ONE OR MORE AIRCRAFT

706

APPLY A FIRST AIRCRAFT PERFORMANCE MODEL TO THE FIRST PHASE FLIGHT DATA TO DETERMINE FIRST PARAMETER VALUES OF FIRST PARAMETERS

708

IDENTIFY A SECOND PORTION OF THE FLIGHT DATA AS SECOND PHASE FLIGHT DATA ASSOCIATED WITH A SECOND PHASE OF THE ONE OR MORE FLIGHTS

710

APPLY THE FIRST AIRCRAFT PERFORMANCE MODEL TO THE SECOND PHASE FLIGHT DATA TO DETERMINE SECOND PARAMETER VALUES OF SECOND PARAMETERS

712

GENERATE, BASED AT LEAST IN PART ON THE FIRST PARAMETER VALUES AND THE SECOND PARAMETER VALUES, A SECOND AIRCRAFT PERFORMANCE MODEL OF A PARTICULAR AIRCRAFT OF THE PARTICULAR AIRCRAFT TYPE

714

GENERATE, BASED ON THE SECOND AIRCRAFT PERFORMANCE MODEL, AN OUTPUT ASSOCIATED WITH A PLANNED FLIGHT OF THE PARTICULAR AIRCRAFT

716

PROVIDE THE OUTPUT TO A DEVICE

*FIG. 7*

800

802
SPECIFICATION AND DESIGN

106
FLIGHT DATA ANALYZER

804
MATERIAL PROCUREMENT

106
FLIGHT DATA ANALYZER

806
COMPONENT AND SUBASSEMBLY MANUFACTURING

106
FLIGHT DATA ANALYZER

808
SYSTEM INTEGRATION

106
FLIGHT DATA ANALYZER

810
CERTIFICATION AND DELIVERY

106
FLIGHT DATA ANALYZER

812
IN SERVICE

106
FLIGHT DATA ANALYZER

814
MAINTENANCE AND SERVICE

106
FLIGHT DATA ANALYZER

*FIG. 8*

FIG. 9

EP 4 343 609 B1

1000

INPUT/OUTPUT
DEVICE(S) 1070

COMPUTING DEVICE 1010

SYSTEM MEMORY 1030

OPERATING SYSTEM 1032

APPLICATIONS
(E.G., INSTRUCTIONS) 1034

FLIGHT DATA ANALYZER 106

PROGRAM DATA 1036

INPUT/OUTPUT
INTERFACE(S) 1050

PROCESSOR(S) 1020

STORAGE
DEVICE(S) 1040

COMMUNICATIONS
INTERFACE(S) 1060

DEVICE(S) OR CONTROLLER(S) 1080

DEVICE 144

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113962420 A